# EUROPEAN PATENT APPLICATION

(11) **EP 3 862 945 A1**
(43) Date of publication of application: **11.08.2021**
(21) Application number: 19868554.7
(22) Date of filing: 26.09.2019
(51) Int. Cl.: G06Q 10/08, G07F 9/00

(54) **TOBACCO PRODUCT MANAGEMENT DEVICE AND TOBACCO PRODUCT MANAGEMENT METHOD**

(30) Priority: 02.10.2018 JP 2018187672
(71) Applicant: Japan Tobacco Inc., Tokyo 105-6927 (JP)
(72) Inventor: OJIMA, Atsushi, Tokyo 105-8422 (JP)
(74) Representative: Hoffmann Eitle
(86) International application number: PCT/JP2019/037973
(87) International publication number: WO 2020/071247

(57) **Abstract**

A tobacco product management device equipped with: a means for acquiring a stocked brand identifier capable of identifying the brand of a tobacco product that is stocked or to be stocked in a product storage unit storing tobacco products in a removable manner; a means for determining whether an order terminal is able to display brand information for a brand of tobacco product indicated by a stocked brand identifier; a means for extracting, from a brand master memory unit, the brand information for the brand of tobacco product indicated by the stocked brand identifier, on the basis of the determination result; and a means for transmitting at least a portion of the extracted brand information to the order terminal.

## Description

### Technical Field

The present invention relates to a technique for managing a tobacco product.

### Background Art

In convenience stores and other stores, tobacco products of various brands are displayed according to brand in a so-called tobacco fixture. At the time of purchase of a tobacco product, a salesperson picks up a tobacco product of a brand designated by a customer from the tobacco fixture, for example. Typically, tobacco products are delivered in the form of carton to stores and sold in units of carton or pack by unwrapping a carton.

The following PTL 1 describes a product dispensing device that automatically dispenses a tobacco product of a desired brand. The product dispensing device is equipped with an operation panel, and by operating a brand selection switch and a number input switch on the operation panel, a desired number of tobacco products of a desired brand are automatically dispensed.

In the above manner, at the time of purchase of a tobacco product, a customer or a salesperson may operate an order terminal (operation panel) to designate a tobacco product of a desired brand. Such an order terminal may be used in a device that indicates the display position of a tobacco product of a designated brand even if the device does not have a function of automatically dispensing a tobacco product.

### Citation List

### Patent Literature

PTL 1: Japanese Unexamined Patent Application Publication No. 2011-207575

### Summary of Invention

### Technical Problem

However, the brand of a tobacco product that can be designated on an order terminal may not match the brand of a tobacco product stored or displayed in a product dispensing device or a tobacco fixture. For example, if a store newly starts to sell a tobacco product of a brand that has not been sold (handled), such as a tobacco product of a newly released brand, a tobacco product of the brand may be stored or displayed in a product dispensing device or a tobacco fixture but cannot be designated on an order terminal. In addition, a store stops providing a certain brand, a tobacco product of the brand may be not stored or displayed in a product dispensing device or a tobacco fixture but can be designated on an order terminal.

If such a mismatch occurs between the order terminal and a device that stores or displays tobacco products, customers and salespersons may be confused, and in addition, other customers in the store may be kept waiting.

The present invention has been made in view of such circumstances, and provides a technique that enables smooth purchase actions and store management in a store even in a case in which ordering of a tobacco product is accepted by using an order terminal.

A "tobacco product" herein does not mean each and every cigarette for smoking, but means a tobacco product pack or a tobacco product carton, which is a purchase unit. The pack is obtained by wrapping a plurality of (e.g., 20) cigarettes or other tobaccos, and the carton is obtained by wrapping a plurality of (e.g., 10) pack tobacco products of the same type.

If it is necessary to distinguish a pack and a carton from each other herein, a tobacco product of a pack is referred to as "pack product", and a tobacco product of a carton is referred to as "carton product".

### Solution to Problem

The present invention provides a tobacco product management device to be communicably connected to an order terminal, the order terminal being capable of displaying brand information of tobacco products of a plurality of brands and being capable of accepting a designating operation for a brand that a customer wishes to order from among the plurality of brands, the tobacco product management device including: an acquisition means for acquiring a stocked brand identifier by which a brand of a tobacco product is identifiable, the tobacco product being stocked or to be stocked in a product storage unit storing tobacco products in a removable manner; a determination means for determining, based on the acquired stocked brand identifier, whether the order terminal is capable of displaying brand information of a tobacco product of a brand indicated by the stocked brand identifier; an extraction means for extracting, based on a determination result obtained by the determination means, from a brand master storage unit storing master information regarding brands of tobacco products, the brand information of the tobacco product of the brand indicated by the stocked brand identifier; and a transmission means for transmitting, to the order terminal, at least part of the extracted brand information.

As another aspect, the present invention provides a tobacco product management method to be executed by a tobacco product management system including at least an order terminal and a product storage unit, the order terminal capable of displaying brand information of tobacco products of a plurality of brands and accepting a designating operation for a brand that a customer wishes to order from among the plurality of brands, the product storage unit storing tobacco products in a removable manner, the tobacco product management method including: a step of acquiring a stocked brand identifier by which a brand of a tobacco product is identifiable, the tobacco product being stocked or to be stocked in the product storage unit; a step of determining, based on the acquired stocked brand identifier, whether the order terminal is capable of displaying brand information of a tobacco product of a brand indicated by the stocked brand identifier; a step of extracting, based on a result of the determination, from a brand master storage unit storing master information regarding brands of tobacco products, the brand information of the tobacco product of the brand indicated by the stocked brand identifier; and a step of transmitting, to the order terminal, at least part of the extracted brand information.

As another aspect, the present invention can also provide a program causing a computer to execute the above tobacco product management method or a computer-readable recording medium having such a program recorded thereon.

### Advantageous Effects of Invention

According to the present invention, it is possible to provide a technique that enables smooth purchase actions and store management in a store even in a case in which ordering of a tobacco product is accepted by using an order terminal.

### Brief Description of Drawings

[Fig. 1] Fig. 1 schematically illustrates the configuration of a tobacco product management system according to the embodiment.
[Fig. 2] Fig. 2 illustrates an installation example of the tobacco product management system according to the embodiment.
[Fig. 3] Fig. 3 is a front view of a pack fixture and a carton fixture.
[Fig. 4] Fig. 4 schematically illustrates hardware configurations of a management PC and an order terminal.
[Fig. 5] Fig. 5 is a block diagram illustrating a processing configuration example of the management PC, a first control unit, and a second control unit.
[Fig. 6] Fig. 6(a) illustrates an example of a brand master table, and Fig. 6(b) illustrates an example of a by-store brand information table.
[Fig. 7] Fig. 7 illustrates an example of a fixture event log.
[Fig. 8] Fig. 8 illustrates an example of a brand selection screen.
[Fig. 9] Fig. 9 illustrates an example of a brand ordering screen.
[Fig. 10] Fig. 10 schematically illustrates an arrangement example of pieces of brand information on the brand selection screen.
[Fig. 11] Fig. 11 is a flowchart illustrating an operation example of the management PC.
[Fig. 12] Fig. 12 is a perspective view of a pack fixture in a second embodiment.
[Fig. 13] Fig. 13 is a side view of an enlarged part of the pack fixture in the second embodiment.
[Fig. 14] Fig. 14 is a block diagram illustrating a processing configuration example of the management PC, the first control unit, and the second control unit in a second embodiment.

### Description of Embodiments

Now, embodiments of the present invention will be described below with reference to the drawings. Note that each embodiment described below is an example, and the present invention is not limited to the configuration of the embodiment below.

### [Overview]

Before describing details of a tobacco product management system (hereinafter also referred to as subject system) according to each embodiment, an overview of features of the subject system will be described.

The subject system mainly includes an order terminal, a product storage unit, and a tobacco product management device.

Although an example in which tobacco products of both of a pack product and a carton product are handled is illustrated in each embodiment, only a pack product may be handled, or only a carton product may be handled.

The order terminal is formed to be capable of displaying brand information of tobacco products of a plurality of brands and be capable of accepting a designating operation for a brand that a customer wishes to order from among the plurality of brands.

The order terminal is a so-called computer operable by a customer or a salesperson and may be a stationary computer such as an order terminal 20, which will be described later, a mobile computer such as a tablet, or a wearable computer.

As for the "designating operation for a brand that a customer wishes to order" that can be accepted by the order terminal herein, specific operation content thereof is not limited as long as the brand of a tobacco product that the customer wishes to order can be designated by the operation. Examples of the designating operation include an operation performed by a customer or a salesperson for designating, on a touch panel of the order terminal, the brand that the customer wishes to order, an operation performed by a customer or a salesperson for hovering, over a barcode reader of the order terminal, a tobacco product of the brand that the customer wishes to order, an operation performed by a customer or a salesperson for reading aloud, to a microphone of the order terminal, the name of the brand that the customer wishes to order, and the like. Furthermore, the brand information that the customer wishes to order may be registered in a mobile terminal of the customer, such as a smartphone, and the mobile terminal may be hovered over a near-field communication antenna of the order terminal.

Herein, the "brand" of a tobacco product is information by which the kind of individual tobacco product can be identified and is denoted as the product name of the tobacco product. Specifically, the brand name of the tobacco product is the name of a brand group alone or the name of a brand group with indication of a tar amount, a wrapping form, or the like. Examples of the name of the brand group include a brand name such as "MEVIUS (registered trademark)", "SEVEN STARS (registered trademark)", and the like. For the convenience of the description, if the name of the brand group is "Tobacco A", for example, each brand of a tobacco product has a brand name, such as "Tobacco A", "Tobacco A-Box", "Tobacco A-10 mg", "Tobacco A-100's-Box", "Tobacco A-Light", "Tobacco A-7 mg", or "Tobacco A-Light-Box".

The product storage unit stores tobacco products in a removable manner. The product storage unit may be a tobacco dispensing device having the above-described automatic dispensing function or may be a tobacco fixture in which tobacco products are displayed in a manually removable manner without the automatic dispensing function. In each embodiment described below, as specific examples of the product storage unit, a pack fixture 50, a pack fixture 80, and a carton fixture 60 are illustrated. Note that the product storage unit may be any one of the pack fixture 50, the pack fixture 80, and the carton fixture 60.

The tobacco product management device is communicably connected to the order terminal. The communication form between the tobacco product management device and the order terminal may be any of wired communication and wireless communication, and a specific communication form is not limited.

The tobacco product management device is an information processing device including at least one or more processors (information processing circuit (unit)) such as a CPU (Central Processing Unit), an MCU (Microcontroller Unit), an MPU (Microprocessing Unit), or a DSP (Digital Signal Processor). The tobacco product management device may be one or more so-called general-purpose computers, may be a dedicated computer (embedded microcontroller) configured by one or more printed boards, called as embedded system or the like, or may be a combination thereof.

The tobacco product management device can also correspond with only a management PC 10, which will be described later, or can also correspond with the management PC 10 and either or both of a first control unit 30 and a second control unit 40, which will be described later. That is, the tobacco product management device is not limited to a single device.

The tobacco product management device includes at least an acquisition means, a determination means, an extraction means, and a transmission means.

Each processing means is embodied by a computer program stored in a memory, such as a RAM (Random Access Memory), a ROM (Read-Only Memory), or an auxiliary storage device (e.g., hard disk), being executed by the above-described processor.

The acquisition means acquires a stocked brand identifier by which a brand of a tobacco product is identifiable, the tobacco product being stocked or to be stocked in the product storage unit.

The "stocked brand identifier" is brand identification information by which the tobacco product management device can identify the brand of the tobacco product that is stocked or to be stocked in the product storage unit in a manner distinguishable from other brands, and is formed of a character string, numerals, or a combination thereof. Thus, the "stocked brand identifier" corresponds to a brand ID to be described later or a JAN (Japan Article Number) code.

The JAN code is also referred to as EAN (European Article Number), GTIN (Global Trade Item Number)-13, GTIN-8, or the like. Although the JAN code is illustrated as an example of the brand (product) identifier herein, the code system or the like is not limited as long as the brand (product) identifier is attached to the wrapping of the tobacco product.

The method for acquiring the stocked brand identifier herein is not limited. The acquisition means may acquire the stocked brand identifier itself via external communication or the like or may acquire the stocked brand identifier from an externally acquired image or information such as a data stream.

Specifically, as will be described later, a barcode scanner can read a JAN code attached to the wrapping of a tobacco product, the acquisition means can acquire the read information from the barcode scanner and can acquire a stocked brand identifier from the information. In addition, the acquisition means can also acquire a captured image of a tobacco product and can obtain a stocked brand identifier from the image by using a known image recognition technique, or can acquire a stocked brand identifier from voice data of a brand that is read aloud by using a known voice recognition technique.

Specific examples of the acquisition means are a fixture management terminal 56 and a fixture management unit 101 or an order-terminal management unit 103 of the management PC 10, which will be described later.

Herein, to stock a tobacco product (a pack product or a carton product) in the product storage unit (the pack fixture 50 and the carton fixture 60) means both to newly stock the tobacco product and to restock the tobacco product. Hereinafter, if it is necessary to distinguish a case of newly stocking the tobacco product and a case of restocking the tobacco product from each other, the case of newly stocking the tobacco product is referred to as "new stock" and the case of restocking the tobacco product is referred to as "restock".

The determination means determines, based on the stocked brand identifier acquired by the acquisition means, whether the order terminal is capable of displaying brand information of a tobacco product of a brand indicated by the stocked brand identifier. The determination method herein is not limited either.

As will be described later, the above-described determination performed by the determination means can correspond to determination performed by the order-terminal management unit 103 as to whether brand information corresponding to a brand ID of a new stock brand is included in a brand selection screen by referring to ordering face information stored in a product management DB 105.

The above-described determination performed by the determination means may also correspond to determination performed by the fixture management unit 101 as to whether brand information storing a JAN code is stored in a by-store brand information table in the product management DB 105.

Furthermore, the above-described determination performed by the determination means may also correspond to determination as to whether a brand ID of a new stock brand is set in magazine information stored in a magazine management DB 35 or storage region information stored in a storage region management DB 45.

In the above manner, a specific determination method is not limited as long as the determination performed by the determination means determines, in terms of results, whether the order terminal is capable of displaying the brand information of the tobacco product of the brand indicated by the stocked brand identifier.

The extract means extracts, based on a determination result obtained by the determination means, from a brand master storage unit storing master information regarding brands of tobacco products, the brand information of the tobacco product of the brand indicated by the stocked brand identifier. Specifically, if it is determined that the order terminal is incapable of displaying the brand information of the tobacco product of the brand indicated by the stocked brand identifier, the extract means extracts the brand information from the brand master storage unit.

The brand information to be extracted is an image of the tobacco product of the brand, a brand name (product name), a price, a tar amount, a nicotine amount, the number of cigarettes, a smoke taste, or the like. Note that specific details of the brand information to be extracted are not limited as long as a person can grasp the tobacco product of the target brand. For example, only the brand name and the image may be extracted as the brand information, or other information (e.g., campaign information or sales ranking information) other than the above-described information may also be extracted.

As will be described later, the brand master storage unit may be formed in a memory of the tobacco product management device or may be formed in a memory of an external server device. If the brand master storage unit is formed in an external server device, the extraction means can access the server device via communication and can receive the extracted brand information from the server device.

The transmission means transmits, to the order terminal, at least part of the extracted brand information extracted by the extraction means.

As long as the brand information to be transmitted to the order terminal is information by which a user of the order terminal can grasp the tobacco product of the brand in order to designate the tobacco product, specific details thereof are not limited. For example, a display image of the brand information to be output on the order terminal may be transmitted to the order terminal, an information material, information about a display position, and the like may be transmitted so that the display image can be output on the order terminal, or only an information material may be transmitted.

In the above manner, in each embodiment, the stocked brand identifier by which the brand of the tobacco product that is stocked or to be stocked in the product storage unit can be identified is acquired, it is determined whether the order terminal is capable of displaying the brand information of the tobacco product of the brand indicated by the stocked brand identifier, and, based on the determination result, the at least part of the brand information of the brand indicated by the stocked brand identifier extracted from the brand master storage unit is transmitted to the order terminal.

Thus, the order terminal that receives the at least part of the brand information can automatically display information of the brand.

Thus, according to each embodiment, not only a maintenance load of the order terminal can be reduced, but also a mismatch between the brand of a tobacco product stored in the product storage unit and the brand of a tobacco product that can be designated on the order terminal can be eliminated, and smooth purchase actions and store management in a store even in a case in which ordering of a tobacco product is accepted by using the order terminal are enabled.

### [First Embodiment]

Now, a tobacco product management system (subject system) 1 according to a first embodiment having the above-described features will be described below in detail.

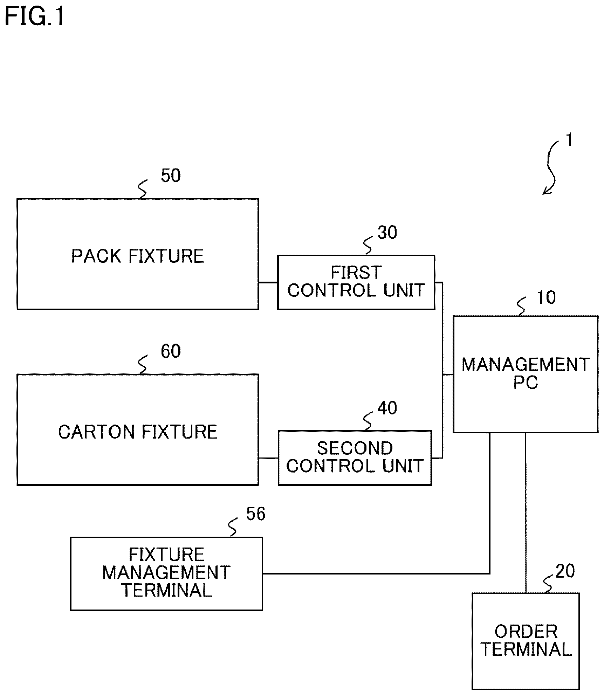

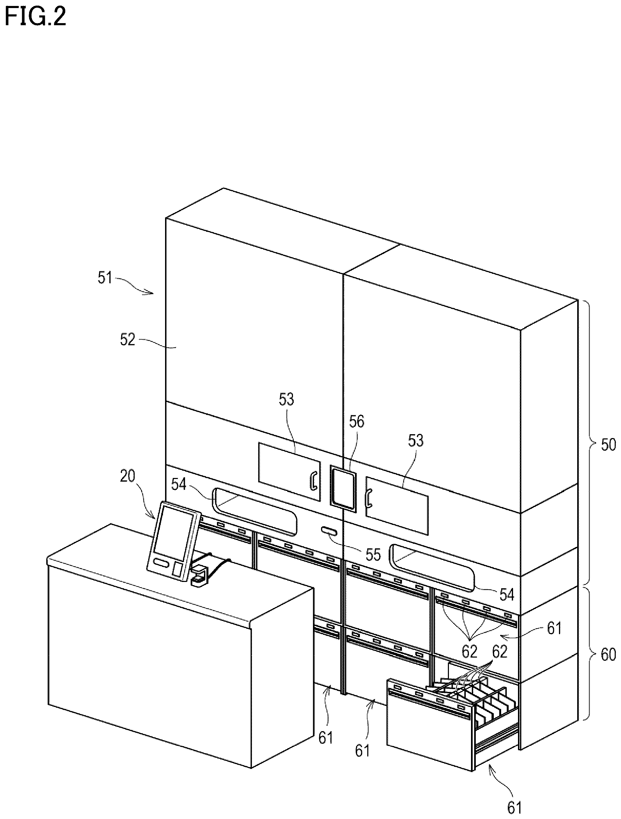

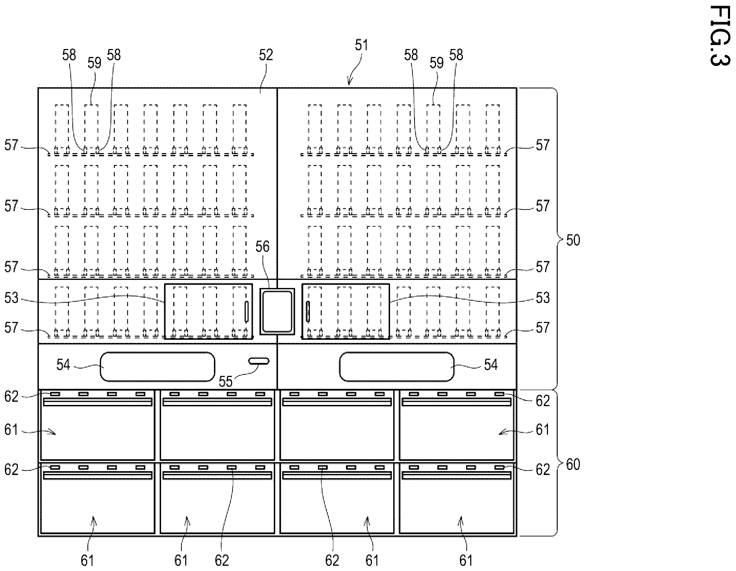

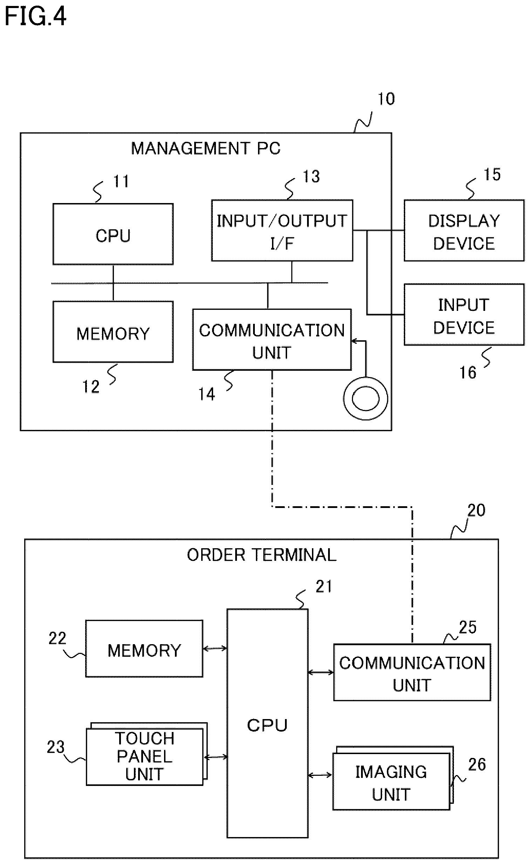

Fig. 1 schematically illustrates the configuration of the tobacco product management system 1 according to the first embodiment. Fig. 2 illustrates an installation example of the tobacco product management system 1 according to the first embodiment. Fig. 3 is a front view of the pack fixture 50 and the carton fixture 60 in the first embodiment. Fig. 4 schematically illustrates hardware configurations of the management PC 10 and the order terminal 20.

As illustrated in Fig. 2, the subject system 1 is installed in a store such as a convenience store. Hereinafter, the store in which the subject system 1 is installed may be referred to as subject store.

As illustrated in Fig. 1, the subject system 1 includes a management PC (Personal Computer) 10, the order terminal 20, the first control unit 30, the second control unit 40, the pack fixture 50, the carton fixture 60, the fixture management terminal 56, and the like.

The management PC 10 is a so-called computer and, as illustrated in Fig. 4, includes a CPU 11, a memory 12, an input/output interface (I/F) 13, a communication unit 14, and the like. The CPU 11 is connected to each of the other units via a communication line such as a bus.

The CPU 11 includes, in addition to a typical CPU, an MCU, an MPU, an application-specific integrated circuit (ASIC), a DSP (Digital Signal Processor), a GPU (Graphics Processing Unit), and the like.

The memory 12 is a RAM (Random Access Memory), a ROM (Read-Only Memory), or an auxiliary storage device (e.g., hard disk).

The input/output I/F 13 can be connected to a user interface device such as a display device 15 or an input device 16. The display device 15 is a device that displays a screen corresponding to rendering data processed by the CPU 11 or the like, such as an LCD (Liquid Crystal Display) or a CRT (Cathode Ray Tube) display. The input device 16 is a device that accepts input of a user operation, such as a keyboard or a mouse. The display device 15 and the input device 16 may be an integrated touch panel and may not be connected.

The communication unit 14 performs wired communication or wireless communication with another computer, signal exchange with another device, and the like. In the first embodiment, the communication unit 14 communicates with the first control unit 30, the second control unit 40, the order terminal 20, and a server device (not illustrated). The communication method performed by the communication unit 14 is not limited. Note that a portable recording medium or the like may also be connected to the communication unit 14.

As illustrated in Fig. 2, the order terminal 20 is a stationary computer installed on a register counter in the subject store so as to be operable by a customer and a salesperson. Note that the installation location of the order terminal 20 may be other than the register counter.

As illustrated in Fig. 4, the order terminal 20 includes a CPU 21, a memory 22, a touch panel unit 23, a communication unit 25, an imaging unit 26, and the like. The CPU 21 is connected to each of other units via a communication line such as a bus.

The touch panel unit 23 includes a display unit that includes a monitor and that performs display processing and a touch sensor that senses an external contact or proximity state. In the first embodiment, two touch panel units 23 are provided to face away from each other, one being provided to face customers, the other being provided to face salespersons. The same display is output on each display panel of the two touch panel units 23. Thus, a salesperson can check a touch panel operation performed by a customer, and a customer can check a touch panel operation performed by a salesperson. Furthermore, a customer and a salesperson can perform a series of tobacco product ordering operations in collaboration by using the touch panels.

The imaging unit 26 is a unit that captures images. In the first embodiment, the imaging unit 26 includes a barcode scanner that can read a barcode, a two-dimensional barcode (e.g., QR code (registered trademark)), or the like, and a vein imaging unit for vein recognition. The barcode scanner can read the barcode or QR code (registered trademark) that is attached to the wrapping of a tobacco product or displayed on a mobile terminal of a customer. The vein imaging unit can capture a vein image from a human finger or palm. A specific imaging method of the imaging unit 26 is not limited.

The communication unit 25 performs wired communication or wireless communication with another computer, signal exchange with another device, and the like. In the first embodiment, the communication unit 25 performs near-field communication with a mobile terminal of a customer and also performs wired communication or wireless communication with the order terminal 20. The communication method performed by the communication unit 25 is not limited.

Note that the CPU 21 and the memory 22 are substantially the same as the CPU 11 and the memory 12 described above.

The hardware configurations illustrated in Fig. 4 are examples, and the hardware configurations of the management PC 10 and the order terminal 20 are not limited to the examples illustrated in Fig. 4. The management PC 10 and the order terminal 20 can include other hardware elements that are not illustrated, and the number of hardware elements are not limited to that in the example in Fig. 4. For example, the management PC 10 or the order terminal 20 may include a plurality of CPUs.

The first control unit 30 is a control board that controls the pack fixture 50, and the second control unit 40 is a control board that controls the carton fixture 60. Specifically, the first control unit 30 and the second control unit 40 are embedded systems each including a CPU, a memory, a communication unit, an input/output interface, and the like, and control the pack fixture 50 or the carton fixture 60 by a control program stored in the memory being executed by the CPU. Details of control of the pack fixture 50 performed by the first control unit 30 and details of control of the carton fixture 60 performed by the second control unit 40 will be described later.

The first control unit 30 is connected to structural elements of the pack fixture 50 through the communication unit or the input/output interface and performs signal exchange with each structural element. The second control unit 40 is connected to structural elements of the carton fixture 60 through the communication unit or the input/output interface and performs signal exchange with each structural element.

In addition, the first control unit 30 and the second control unit 40 are communicably connected to the management PC 10 through the communication units and performs signal exchange with the management PC 10.

The fixture management terminal 56 is a so-called computer of a mobile type and has substantially the same hardware configuration as the order terminal 20. In the first embodiment, the fixture management terminal 56 is installed in a front surface portion of the pack fixture 50, as will be described later.

The fixture management terminal 56 includes a touch panel, and a fixture management menu that enables management of the pack fixture 50 or the carton fixture 60 is displayed on the touch panel. The fixture management menu displayed on the touch panel of the fixture management terminal 56 will be described later. The fixture management terminal 56 is communicably connected to the management PC 10 through the communication unit, and transmits, to the management PC 10, information corresponding to the content of an operation performed on the fixture management menu.

As illustrated in Fig. 2, the pack fixture 50 and the carton fixture 60 are stacked one on top of the other and are installed on the back side (the back counter side) of the register counter of the subject store. In the example in Fig. 2 and Fig. 3, the pack fixture 50 is stacked on the carton fixture 60. However, the positional relationship and the installed positions of the pack fixture 50 and the carton fixture 60 are not limited to the example in Fig. 2 and Fig. 3.

In the following description, for easy understanding of the description, the single pack fixture 50 and the single carton fixture 60 are described. However, two pack fixtures 50 and two carton fixtures 60 may be formed. That is, two carton fixtures 60 may be disposed side by side, and two pack fixtures 50 may be disposed side by side, each on the corresponding one of the carton fixtures 60. The numbers of pack fixtures 50 and carton fixtures 60 installed in the subject store are not limited.

The pack fixture 50 includes a housing 51, a storage shelf, a magazine conveyance mechanism, a product dispensing mechanism, and a sensor unit. The storage shelf, the magazine conveyance mechanism, the product dispensing mechanism, and the sensor unit are disposed inside the housing 51. The housing 51 is formed to have a cuboid form having a front surface portion 52, a top plate portion, a left side surface portion, a right side surface portion, a back surface portion, and a bottom plate portion.

The storage shelf has shelf boards 57 that extend from side to side in a plurality of levels, and the shelf boards 57 are disposed at equal intervals in the vertical direction.

The shelf boards 57 have a plurality of support boards 58 that are disposed at equal intervals in the horizontal direction, and support a plurality of magazines 59 via the respective support boards 58. Each of the support boards 58 supports one magazine 59.

In the first embodiment, the pack fixture 50 includes two storage shelves that are disposed front and back, each storage shelf has four shelf boards 57 provided therein in the vertical direction, and each shelf board 57 has fourteen magazines 59 supported thereon. Note that the number of storage shelves, the number of shelf boards 57, which are included in the pack fixture 50, and the number of magazines 59 supported on each shelf board 57 are not limited to the example in Fig. 2.

A portion of the shelf board 57 (a center portion of the shelf board 57 in the lowest level in the example in Fig. 2) in the front storage shelf is an input magazine installation unit where a magazine 59 in which a pack product is to be stocked from outside is placed. In the example in Fig. 2, six magazines 59 can be installed in the input magazine installation unit.

Hereinafter, other than the input magazine installation unit, a portion where the support boards 58 are provided on the shelf boards 57 in the storage shelf may be referred to as magazine supporting unit.

The magazine conveyance mechanism is operated under control of the first control unit 30, and conveys a designated magazine 59 between the magazine supporting unit and the input magazine installation unit. The magazine conveyance mechanism may be a known mechanism, and detailed description is omitted herein.

The product dispensing mechanism is configured to dispensing a pack product from a magazine 59 supported by the support boards 58 on a shelf board 57 in the storage shelf. The product dispensing mechanism has a projectable body that is provided projectably and retractably, and by projecting the projectable body under control of the first control unit 30, a pack product in the lowest level in the magazine 59 is dispensed from an outlet of the magazine 59. The product dispensing mechanism may also be a known mechanism, and detailed description is omitted herein.

The sensor unit includes a dispensing sensor and a product sensor. The dispensing sensor detects dispensing of a pack product from a magazine 59 by sensing a projecting operation of the projectable body of the product dispensing mechanism. The product sensor detects the height of stacked pack products by sensing pack products stored in a magazine 59. For example, the dispensing sensor can detect normal dispensing from the magazine 59 by detecting, using light, projection of the projectable body to a predetermined position where the pack product can be dispensed. In addition, the product sensor can detect the height of the stacked pack products by projecting light in the short-side direction of the magazine 59, moving the light projection position upward from the lowest portion in the long-side direction of the magazine 59, and by detecting the light transmission status. Note that the detection methods of the dispensing sensor and the product sensor are not limited to such examples. Sensing information measured by the sensor unit is transmitted to the first control unit 30. Note that the product sensor can be referred to as product sensor unit that senses tobacco products stored in a product stocker unit (a magazine 59).

The magazine 59 is formed as a box shape that is elongated in the vertical direction. In the magazine 59, a plurality of (e.g., 10) pack products of at least one carton can be stored in a state of being stacked one on top of another. In one magazine 59, pack products of the same brand are stored. Thus, a plurality of magazines 59 provided in the pack fixture 50 in the first embodiment can be referred to as plurality of product stocker units that are capable of storing tobacco products in a classified manner according to brand.

In addition, an outlet is provided on each of a front side and a back side of a lower end portion of the magazine 59, and a pack product in the lowest level can be discharged from each outlet.

Furthermore, the magazine 59 includes a lid portion that can be opened or closed by a human. In a state where the lid portion is open, a pack product can be restocked in the magazine 59.

In the front surface portion 52 of the housing 51, two inlets that are openings for inputting a pack product to a magazine 59 from a front side of the housing 51 are formed, and two open/close doors 53 for opening or closing the respective inlets are provided.

Each inlet is formed to be able to expose, to the front side, a plurality of magazines 59 installed in the above-described input magazine installation unit. In the example in Fig. 2, each inlet is formed to be able to expose three magazines 59 to the front side.

Each of the two open/close doors 53 has a lock mechanism that is automatically unlocked or locked under control of the first control unit 30. If the lock mechanism is in locked state, the open/close door 53 cannot be open; if the lock mechanism is in unlocked state, the open/close door 53 can be open. In addition, by setting the open/close door 53 from open state to completely closed state, the lock mechanism is automatically set to locked state. Thus, the open/close doors 53 and the lock mechanisms thereof in the first embodiment can be referred to as stocker access unit that sets at least one (a magazine 59) of the plurality of product stocker units to operator accessible state or inaccessible state.

The lock mechanisms are provided in the above manner for the open/close doors 53 that shield the inlets, and thus, unauthorized access to the magazines 59 can be prevented.

Furthermore, in a lower portion of the front surface portion 52 of the housing 51, two removal openings 54 that are openings for removing a pack product dispensed from a magazine 59 to the front side of the housing 51 are formed. In a lower portion inside the housing 51, two chutes for conveying and guiding a pack product dispensed from a magazine 59 to any one of the two removal positions are provided. Each removal position is a flat portion provided in a lower end portion of a corresponding chute and is disposed at a position easily accessible from outside through a corresponding removal opening 54.

A scan window 55 for a barcode scanner is provided between the above-described two removal openings 54 in the front surface portion 52 of the housing 51. When a barcode attached to the wrapping of a pack product or a carton product to be stocked is hovered over the scan window 55, the barcode scanner can read the barcode.

In addition, the fixture management terminal 56 to be operated by an operator (a salesperson) is installed between the above-described two inlets in the front surface portion 52 of the housing 51.

By the way, the above-described barcode scanner may be communicably connected to the first control unit 30, and may be communicably connected to the fixture management terminal 56 or the management PC 10. The first embodiment illustrates an example in which the barcode scanner is connected to the fixture management terminal 56.

The carton fixture 60 includes a cuboid-shaped frame body and a plurality of drawers 61 held in the frame body. In the example in Fig. 2 and Fig. 3, eight drawers 61 are illustrated. However, the number of drawers 61 included in the carton fixture 60 is not limited to that in the example in Fig. 2.

Each of the drawers 61 includes a tray-like drawer main body and a front wall portion. The drawer main body supports a plurality of carton products with a bottom plate. The front wall portion is provided at the front end of the drawer main body and stands vertically. An operator can pull out a drawer 61 from the frame body and can store the drawer 61 in the frame body. In a state where a drawer 61 is stored in a frame body, the front wall portion thereof is substantially flush with the front end portion of the frame body and the front surface portion of the pack fixture 50.

In the drawer main body of each drawer 61, a plurality of longitudinal partition units and a plurality of lateral partition units are provided. The plurality of longitudinal partition units extend in the front-to-back direction and partition the inside of the drawer 61 in the horizontal direction. The plurality of lateral partition units partition each inside region partitioned by the longitudinal partition units in the front-to-back direction. Thus, in the first embodiment, the inside region of each drawer 61 is partitioned into 4 regions in the horizontal direction and 9 regions in the front-to-back direction, and 36 storage regions in total are formed. One carton product is stored in each storage region. That is, in the first embodiment, 36 carton products can be stored in each drawer 61. Thus, a plurality of storage regions provided in the carton fixture 60 in the first embodiment can be referred to as plurality of product stocker units that are capable of storing tobacco products in a classified manner according to brand.

On an upper part of the front wall portion of each drawer 61 and on the longitudinal partition units of the drawer 61, carton-position reporting LEDs 62 for reporting positions of the storage regions in the drawer 61 are provided.

A carton-position reporting LED 62 provided on the front wall portion reports a drawer 61 in which a storage region is formed and also reports a position in the horizontal direction partitioned by the longitudinal partition units at which the storage region is disposed in the drawer 61. A carton-position reporting LED 62 provided on a longitudinal partition unit in each drawer 61 reports a position in the front-to-back direction partitioned by the lateral partition units at which the storage region is disposed in the drawer 61.

That is, the carton-position reporting LED 62 provided on the front wall portion reports the drawer 61 and the position in the horizontal direction in the drawer 61, and the carton-position reporting LED 62 provided on the longitudinal partition unit reports the position in the front-to-back direction in the drawer 61. Thus, an operator can quickly access a target storage region.

The carton-position reporting LEDs 62 are controlled to be turned on or off by the second control unit 40.

Furthermore, each drawer 61 includes a detection sensor that detects a carton product when the carton product is stored in an individual storage region. The detection sensor can be, for example, a weight sensor provided on the bottom plate of the drawer main body. Note that the detection sensor may also be a sensor of another type, such as an optical sensor or a capacitance sensor. The detection sensor can be referred to as product sensor unit that senses tobacco products stored in a product stocker unit (a storage region).

In addition, the carton fixture 60 includes lock mechanisms by which each drawer 61 can be selectively pulled out from the frame body. In normal state, the lock mechanisms are in locked state so that all the drawers 61 cannot be pulled out from the frame body. Under control of the second control unit 40, a lock mechanism is selectively set to unlocked state so that only a designated drawer 61 can be pulled out from the frame body. Thus, the drawers 61 and the lock mechanisms thereof in the first embodiment can be referred to stocker access unit that sets at least one (a storage region) of the plurality of product stocker units to operator accessible state or inaccessible state.

The lock mechanisms are provided for the drawers 61, and thus, unauthorized access to the storage regions for carton products can be prevented.

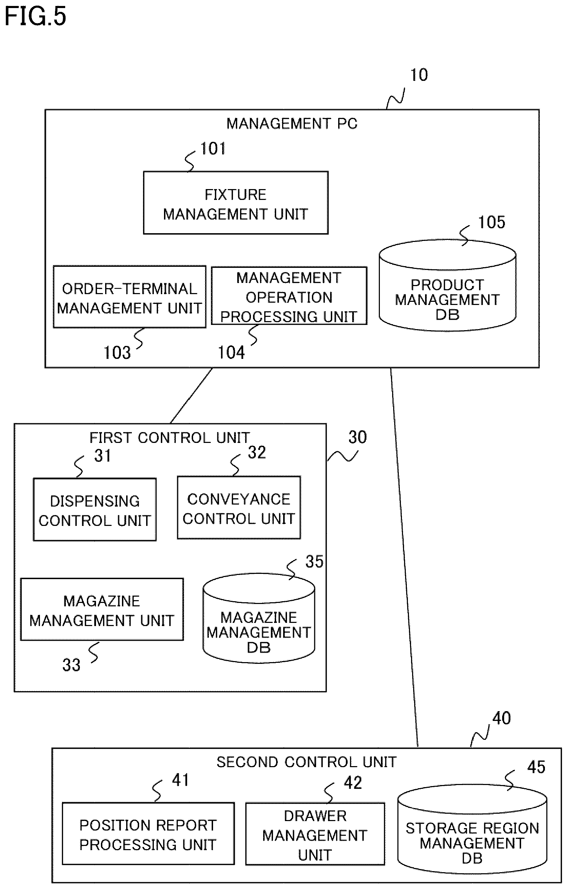

Next, a processing configuration of the management PC 10, the first control unit 30, and the second control unit 40 will be described with reference to Fig. 5. Fig. 5 is a block diagram illustrating a processing configuration example of the management PC 10, the first control unit 30, and the second control unit 40.

The first control unit 30 includes a dispensing control unit 31, a conveyance control unit 32, a magazine management unit 33, a magazine management database (DB) 35, and the like. These are software elements and are embodied by a control program stored in the memory, such as a RAM or a ROM, being executed by the CPU.

The magazine management DB 35 stores pieces of magazine information in which a brand ID, the installed position of a magazine 59, and a remaining number are associated. The number of the pieces of magazine information equals to the total number of magazines 59 provided in the housing of the pack fixture 50.

The brand ID is an identifier by which the brand of a tobacco product can be identified.

The installed position of a magazine 59 is position information by which the conveyance mechanism and the dispensing mechanism of the pack fixture 50 can identify the position where the magazine 59 for storing a pack product of the brand indicated by the corresponding brand ID is installed. The position information stored in the magazine management DB 35 is, for example, a position identifier formed of a number of a storage shelf, a number of a shelf board 57, and a number of a support board 58 on the shelf board 57, and the position identifier can be converted into an actual installed position of the magazine 59. The first control unit 30 can transmit the position information to the dispensing mechanism so that the dispensing mechanism can dispense a pack product from the magazine 59 installed at the position identified by the position information. Similarly, the first control unit 30 can transmit the position information to the conveyance mechanism so that the conveyance mechanism can convey the magazine 59 installed at the position identified by the position information to the input magazine installation unit. If the installed position of the magazine 59 is changed by the conveyance mechanism, the changed installed position is reflected in the magazine management DB 35.

The remaining number is the number of pack products stored in the corresponding magazine 59.

Based on a dispensing instruction transmitted from the management PC 10, the dispensing control unit 31 operates the dispensing mechanism of the pack fixture 50. Specifically, the dispensing instruction includes a brand ID corresponding to the brand of a pack product to be dispensed and the number of pack products. Based on the brand ID included in the dispensing instruction received from the management PC 10, by referring to the magazine management DB 35, the dispensing control unit 31 identifies the installed position of a magazine 59 associated with the brand ID and causes the dispensing mechanism of the pack fixture 50 to dispense the corresponding number of pack products from the magazine 59 at the identified installed position.

On the other hand, the dispensing control unit 31 monitors sensing information from the dispensing sensor, and, based on the sensing information, upon confirmation of appropriate dispensing, notifies the management PC 10 of the number of dispensed pack products together with dispensing completion.

If a collective dispensing instruction is received from the management PC 10, the dispensing control unit 31 operates the dispensing mechanism of the pack fixture 50, and all pack products are dispensed from one or more magazines 59 storing pack products of a renewed/discontinued brand designated by the collective dispensing instruction.

Based on a stock instruction transmitted from the management PC 10, the conveyance control unit 32 operates the conveyance mechanism of the pack fixture 50. Specifically, the stock instruction includes a brand ID corresponding to the brand of a pack product to be stored in a magazine 59 to be conveyed, and, based on the brand ID included in the stock instruction received from the management PC 10, by referring to the magazine management DB 35, the conveyance control unit 32 identifies the installed position of the magazine 59 associated with the brand ID and conveys the magazine 59 at the identified installed position to the input magazine installation unit.

In addition to a brand ID of a new stock brand, the stock instruction may include the installed position of a magazine 59. In this case, since a record in which the brand ID is set does not exist in the magazine management DB 35, by using the installed position of the magazine 59 included in the stock instruction, the conveyance control unit 32 conveys the magazine 59 to the input magazine installation unit.

At this time, if the input magazine installation unit is full, the conveyance control unit 32 can convey a magazine 59 that is already installed in the input magazine installation unit to a vacant position in the magazine supporting unit so as to make a vacant position in the input magazine installation unit.

The magazine management unit 33 updates the installed position of a magazine 59 and a remaining number stored in the magazine management DB 35. Specifically, if a magazine 59 is conveyed by an operation of the conveyance mechanism, the magazine management unit 33 changes the installed position of the magazine 59 stored in the magazine management DB 35. In addition, upon the dispensing control unit 31 confirming dispensing completion, the magazine management unit 33 changes the corresponding remaining number stored in the magazine management DB 35 to a value obtained by subtracting the number of dispensed pack products.

Furthermore, after an open/close door 53 is closed and the lock mechanism has been set in locked state, based on sensing information (the height of the stacked pack products) transmitted from the product sensor, the magazine management unit 33 detects the number of pack products stored in a target magazine 59 and updates a remaining number associated with the target magazine 59 stored in the magazine management DB 35 to the number. In addition, based on the number of detected pack products, the magazine management unit 33 can detect stock completion and can notify the management PC 10 of the number of stocked pack products together with stock completion.

Thus, the magazine management unit 33 can be referred to as a stock detection means for detecting, based on sensing information from the product sensor unit (the product sensor), stock of a tobacco product in a product stocker unit (a magazine 59). The management PC 10 that is notified of stock completion may also be referred to as having the stock detection means.

If stock completion of a pack product of a new stock brand is detected, the magazine management unit 33 sets, in the magazine management DB 35, a brand ID of the new stock brand in a record corresponding to a magazine 59 in which the pack product is stocked.

In addition, upon the dispensing control unit 31 confirming collective dispensing completion, the magazine management unit 33 identifies a record in the magazine management DB 35, in which a brand ID that is a target for collective dispensing is set, and clears the brand ID in the record. This cancels the assignment to a magazine 59 to which the renewed/discontinued brand is assigned.

If information stored in the magazine management DB 35 is updated in the above manner, the magazine management unit 33 transmits the information stored in the magazine management DB 35 to the management PC 10 for synchronization.

In addition, the magazine management unit 33 controls the lock mechanisms of the open/close doors 53. Specifically, based on a conveyance instruction transmitted from the management PC 10, after the conveyance control unit 32 has completed conveyance of a magazine 59 to the input magazine installation unit, the magazine management unit 33 sets the lock mechanism of an open/close door 53 to unlocked state. Subsequently, upon detection of completely closed state of the open/close door 53, the magazine management unit 33 sets the lock mechanism of the open/close door 53 to locked state.

The second control unit 40 includes a position report processing unit 41, a drawer management unit 42, the storage region management database (DB) 45, and the like. These are software elements and are embodied by a control program stored in the memory, such as a RAM or a ROM, being executed by the CPU.

The storage region management DB 45 stores storage region information in which, for all storage regions formed in the carton fixture 60, the position of a storage region, a brand ID indicating the brand of a carton product to be stored in the storage region, and a storage state (present/absent) of the carton product are associated with each other.

The position of each storage region stored in the storage region management DB 45 may be formed of, for example, a number of a drawer 61, a column number in the horizontal direction in the drawer 61, and a partition number in the front-to-back direction in the drawer 61.

Upon reception of a dispensing instruction or a stock instruction from the management PC 10, based on the instruction, the position report processing unit 41 turns on corresponding carton-position reporting LEDs 62 provided in the carton fixture 60.

Specifically, the dispensing instruction and the stock instruction include a brand ID corresponding to the brand of a target pack product, and, based on the brand ID included in the dispensing instruction or the stock instruction received from the management PC 10, by referring to the storage region management DB 45, the position report processing unit 41 identifies the position of a storage region associated with the brand ID and turns on carton-position reporting LEDs 62 corresponding to the identified position.

In addition to a brand ID of a new stock brand, the stock instruction may include the position of a storage region. In this case, since a record in which the brand ID is set does not exist in the storage region management DB 45, by using the position of the storage region included in the stock instruction, the position report processing unit 41 turns on carton-position reporting LEDs 62 corresponding to the position.

If the dispensing instruction is received, subsequently, based on sensing information from the detection sensor, upon confirmation of removal of a carton product from a target storage region, the position report processing unit 41 notifies the management PC 10 of dispensing completion. On the other hand, if the stock instruction is received, subsequently, based on sensing information from the detection sensor, upon confirmation of storage of a carton product in a target storage region, the position report processing unit 41 notifies the management PC 10 of stock completion.

Thus, the position report processing unit 41 can be referred to as a stock detection means for detecting, based on sensing information from the product sensor unit (the detection sensor), stock of a tobacco product in a product stocker unit (a storage region). The management PC 10 that is notified of stock completion may also be referred to as having the stock detection means.

If a collective dispensing instruction is received from the management PC 10, the position report processing unit 41 turns on carton-position reporting LEDs 62 corresponding to the positions of all storage regions storing carton products of a renewed-or-discontinued brand designated by the collective dispensing instruction.

The drawer management unit 42 mainly updates a brand ID and a storage state (present/absent) of a carton product stored in the storage region management DB 45. Specifically, upon the position report processing unit 41 confirming dispensing completion, the drawer management unit 42 changes the storage state of a corresponding carton product stored in the storage region management DB 45 from present to absent.

Furthermore, in a case in which the detection sensor detects that a carton product is placed, after the lock mechanism of the drawer 61 has been set to locked state, the drawer management unit 42 changes the storage state of the carton product corresponding to a target storage region stored in the storage region management DB 45 from absent to present. In addition, in a case in which it is detected that a carton product of a new stock brand is placed, the drawer management unit 42 sets, in the storage region management DB 45, a brand ID of the new stock brand in a record corresponding to a storage region storing the carton product.

In addition, upon the position report processing unit 41 confirming collective dispensing completion, the drawer management unit 42 identifies a record in the storage region management DB 45, in which a brand ID that is a target for collective dispensing is set, and clears the brand ID in the record. This cancels the assignment to a storage region to which the renewed-or-discontinued brand is assigned.

If information stored in the storage region management DB 45 is updated in the above manner, the drawer management unit 42 transmits the information stored in the storage region management DB 45 to the management PC 10 for synchronization.

In addition, the drawer management unit 42 controls the lock mechanisms of the drawers 61. Specifically, based on a dispensing instruction, a collective dispensing instruction, or a stock instruction transmitted from the management PC 10, after corresponding carton-position reporting LEDs 62 have been turned on, the drawer management unit 42 sets the lock mechanism of the corresponding drawer 61 to unlocked state. Subsequently, upon detection of complete storage in the drawer 61, the drawer management unit 42 sets the lock mechanism of the drawer 61 to locked state.

The management PC 10 includes the fixture management unit 101, the order-terminal management unit 103, a management operation processing unit 104, the product management database (DB) 105, and the like. These are software elements and are embodied by a control program stored in the memory 12, such as a RAM or a ROM, being executed by the CPU 11.

The product management DB 105 stores brand master information, by-store brand information, fixture setting information, ordering face information, a fixture event log, and the like.

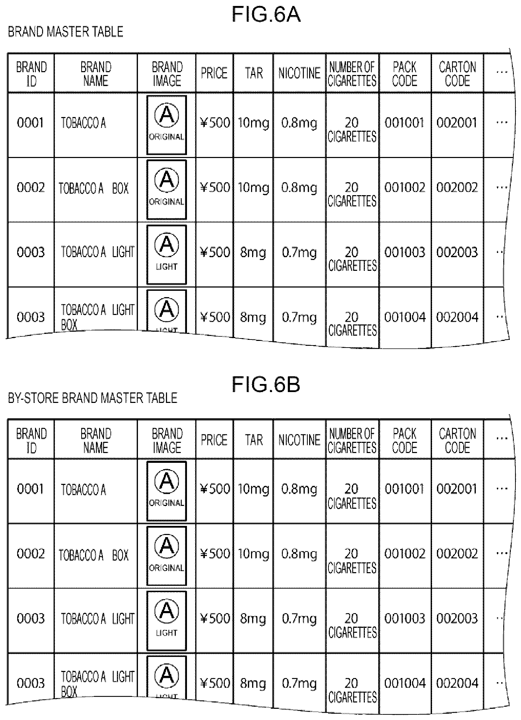

Fig. 6(a) illustrates an example of a brand master table, and Fig. 6(b) illustrates an example of a by-store brand information table. In the first embodiment, the brand master information is stored in the brand master table, and the by-store brand information is stored in the by-store brand information table.

As illustrated in Fig. 6(a), the brand master table is a master table storing, according to brand, brand information such as a brand ID, a brand name, a brand image, a price, a tar amount, a nicotine amount, the number of pack products, a pack code, or a carton code. In the first embodiment, the brand master table stores brand information of all brands, information of which can be obtained from tobacco manufacturers. That is, the brand master table stores information on a newly released brand or rare brand that has not been handled in the subject store or a discontinued brand that was previously handled but is not currently handled in the subject store. Note that the brand master table does not necessarily store information on the discontinued brand. In addition, the brand master table may store other brand information, such as a smoke taste, not illustrated in Fig. 6(a).

The pack code is a JAN code attached to the wrapping of a pack product of a corresponding brand. The carton code is a JAN code attached to the wrapping of a carton product of a corresponding brand.

The management PC 10 obtains the most recent brand information from an external server device and reflects it in the brand master table.

As illustrated in Fig. 6(b), the by-store brand information table is a table that stores brand information, items (fields) of which are substantially the same as those of the brand master table. However, the by-store brand information table differs from the brand master table in storing only the brand information of brands that are currently handled in the subject store.

The fixture setting information includes information that is substantially the same as information in the above-described magazine management DB 35 included in the first control unit 30 and in the above-described storage region management DB 45 included in the second control unit 40. The above information is acquired from the first control unit 30 and the second control unit 40 and stored in the product management DB 105. Hereinafter, information that is included in the fixture setting information and that is substantially the same as that in the magazine management DB 35 and the storage region management DB 45 may be referred to as the magazine management DB 35 and the storage region management DB 45 in the fixture setting information.

Furthermore, the fixture setting information includes renewal-or-discontinuation reservation information acquired from the fixture management terminal 56. The renewal-or-discontinuation reservation information is a piece of information included in renewal-or-discontinuation designation information that designates a renewed-or-discontinued brand to be replaced, is information that designates and reserves a renewed-or-discontinued brand to be replaced, and includes a brand ID of the renewed-or-discontinued brand.

Herein, the renewed-or-discontinued brand can also be referred to as a replaced brand, and the renewal-or-discontinuation reservation information can also be referred to as replacement reservation information.

The ordering face information is brand-selection-screen configuration information by which a brand selection screen can be displayed on the order terminal 20 and includes brand information such as a brand ID, a brand image, or a brand name, arrangement information of brands within the brand selection screen, and the like. The ordering face information is used in brand-selection-screen generation processing performed by the order-terminal management unit 103, which will be described later.

The ordering face information may further include the most recent time for generating a brand selection screen.

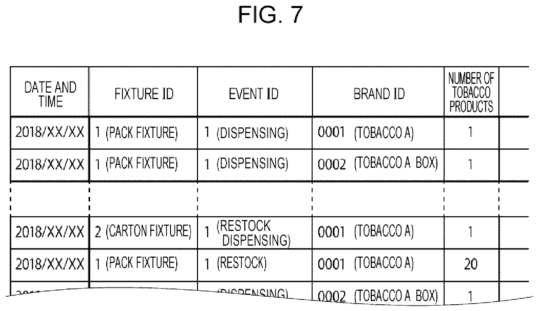

Fig. 7 illustrates an example of the fixture event log.

As illustrated in Fig. 7, the fixture event log includes, for each event that has occurred in the fixtures, information such as the event occurrence date and time (simply referred to as date and time), a fixture ID for identifying a fixture in which the event has occurred, an event ID for identifying event details, a brand ID, or the number of tobacco products.

The fixture ID includes an ID indicating the pack fixture 50 and an ID indicating the carton fixture 60.

The event ID includes an ID indicating that a pack product or a carton product has been dispensed, an ID indicating that a pack product or a carton product has been restocked, an ID indicating that a carton product has been dispensed for restock of pack products of the same brand, and the like.

The brand ID and the number of tobacco products indicate the brand and the number of tobacco products handled in a corresponding event.

Such a fixture event log is updated by the fixture management unit 101, which will be described later.

The fixture management unit 101 communicates with the first control unit 30 and the second control unit 40 to manage the pack fixture 50 and the carton fixture 60.

Specifically, if ordered brand information is acquired from the order terminal 20, based on the ordered brand information, the fixture management unit 101 transmits a dispensing instruction regarding an ordered brand to the first control unit 30 or the second control unit 40. Based on an order unit ID included in the ordered brand information, the fixture management unit 101 determines that an order unit is either one or both of a pack product and a carton product. If the order unit includes a pack product, the fixture management unit 101 transmits a dispensing instruction including a brand ID of the ordered brand and the number of pack products to the first control unit 30. If the order unit includes a carton product, the fixture management unit 101 transmits a dispensing instruction including a brand ID of the ordered brand and the number of carton products to the second control unit 40. Thus, the fixture management unit 101 can be referred to as a dispensing control means for instructing, if information indicating an ordered brand designated by the designating operation is acquired from the order terminal, the product storage unit to dispense a tobacco product of the ordered brand.

Subsequently, upon being notified of the number of dispensed pack products together with dispensing completion from the first control unit 30 (the dispensing control unit 31), the fixture management unit 101 adds a record regarding the dispensing of the pack products to the fixture event log in the product management DB 105. In this record, the date and time, the fixture ID (the pack fixture 50), the event ID (dispensing), the brand ID (the brand ID of the ordered brand), and the number of pack products (the number of dispensed pack products) are set.

Similarly, upon being notified of dispensing completion from the second control unit 40 (the position report processing unit 41), the fixture management unit 101 adds a record regarding the dispensing of the carton products to the fixture event log in the product management DB 105. In this record, the date and time, the fixture ID (the carton fixture 60), the event ID (dispensing), the brand ID (the brand ID of the ordered brand), and the number of carton products (the number of dispensed carton products) are set.

On the other hand, if ordered brand information is acquired from the order terminal 20 when at least one of the lock mechanisms of the two open/close doors 53 in the pack fixture 50 is in unlocked state, the fixture management unit 101 suspends transmission of a dispensing instruction in accordance with the ordered brand information until the lock mechanism is set to locked state. Similarly, if ordered brand information is acquired from the order terminal 20 when the lock mechanism of at least one of the drawers 61 in the carton fixture 60 is in unlocked state, the fixture management unit 101 suspends transmission of a dispensing instruction in accordance with the ordered brand information until the lock mechanism is set to locked state. That is, if information indicating the ordered brand is acquired when the at least one of the product stocker units is in accessible state, the dispensing control means suspends an instruction for dispensing a tobacco product of the ordered brand until the product stocker unit is set to inaccessible state.

The fixture management unit 101 can acquire the state of the lock mechanisms of the open/close doors 53 from the magazine management unit 33 of the first control unit 30 and can acquire the state of the lock mechanisms of the drawers 61 from the drawer management unit 42 of the second control unit 40.

Thus, if the timing for ordering a tobacco product corresponds with the timing for stocking (restocking) a tobacco product in the pack fixture 50 or the carton fixture 60, the ordering can be made to precede, reducing the waiting time of a customer, and the process can proceed without confusing an operator (a salesperson) of the pack fixture 50 or the carton fixture 60.

Furthermore, the fixture management unit 101 suspends transmission of a dispensing instruction, and also, the management operation processing unit 104, which will be described later, can output display for reporting that an order is placed on the fixture management terminal 56. Thus, an operator (a salesperson) who faces the pack fixture 50 or the carton fixture 60 to perform a stock process can quickly grasp that an order is placed.

In addition, in a case of performing collective dispensing of tobacco products of a renewed-or-discontinued brand, the fixture management unit 101 transmits a collective dispensing instruction designating a brand ID to each of the first control unit 30 and the second control unit 40.

If a stock request operation is performed on the fixture management terminal 56, the fixture management unit 101 determines whether a stock brand that is the target in the stock request operation is assigned to a magazine 59 in the pack fixture 50 or a storage region in the carton fixture 60, and then transmits a stock instruction regarding the stock brand to the first control unit 30 or the second control unit 40. The stock brand means the brand of a tobacco product to be stocked.

The case in which the stock request operation is performed on the fixture management terminal 56 herein includes a case of restocking a tobacco product and a case of newly stocking a tobacco product. In a case of restocking a tobacco product, since the tobacco product of the stock brand has already been stored in the pack fixture 50 or the carton fixture 60, brand information of the stock brand is stored in the by-store brand information table in the product management DB 105. On the other hand, in a case of newly stocking a tobacco product, since the tobacco product of the stock brand is yet to be stored in both the pack fixture 50 and the carton fixture 60, brand information of the stock brand is not stored in the by-store brand information table.

Thus, based on the brand ID, the pack code, or the carton code regarding the stock brand, by referring to the by-store brand information table in the product management DB 105, the fixture management unit 101 can determine whether the stock brand is assigned to a magazine 59 in the pack fixture 50 or a storage region in the carton fixture 60.

Furthermore, in the first embodiment, depending on whether a record in which the brand ID of the stock brand is set exists in the magazine management DB 35 and the storage region management DB 45 in the fixture setting information stored in the product management DB 105, it can be determined whether the stock brand is assigned to a magazine 59 in the pack fixture 50 or a storage region in the carton fixture 60.

In the following description, any of these determinations may be referred to as determination as to whether a brand is assigned to a magazine 59 or a storage region.

The stock request operation in a case of restocking a tobacco product herein briefly includes the following three types.

In a stock request operation of a first type, an operator (a salesperson) selects a stock target brand from a brand list of tobacco products stored in the pack fixture 50 or the carton fixture 60. The brand list is displayed and selected in the fixture management terminal 56. Hereinafter, this will be referred to as first stock request operation.

In a stock request operation of a second type, by using a JAN code that is read by an operator hovering a stock target pack product over the scan window 55 of the pack fixture 50, a stock target brand is designated. In this case, also, from the menu displayed on the fixture management terminal 56, a "restock pack product by scanning" menu is selected. Hereinafter, this will be referred to as second stock request operation.

In a stock request operation of a third type, by using a JAN code that is read by an operator hovering a stock target carton product over the scan window 55 of the pack fixture 50, a stock target brand is designated. In this case, also, from the menu displayed on the fixture management terminal 56, a "restock carton product by scanning" menu is selected. Hereinafter, this will be referred to as third stock request operation.

An operation ID by which such first, second, and third stock request operations can be identified is acquired from the fixture management terminal 56, and thereby, based on the operation ID, the fixture management unit 101 performs the following stock processing.

If an operation ID indicating the second stock request operation and a JAN code of a pack product are acquired from the fixture management terminal 56, the fixture management unit 101 identifies brand information storing the JAN code as a pack code, from the by-store brand information table in the product management DB 105. At the time of restocking a tobacco product, since the target brand information can be identified, the fixture management unit 101 transmits a stock instruction including the brand ID in the brand information to the first control unit 30. Thus, in the pack fixture 50, a magazine 59 to which the brand ID of the stock brand is assigned is conveyed to the input magazine installation unit, the lock mechanism of the open/close door 53 is set to unlocked state, and a pack product can be restocked in the magazine 59.

Subsequently, upon being notified of stock completion from the first control unit 30, the fixture management unit 101 adds a record regarding stock of the pack product to the fixture event log in the product management DB 105. In this record, the date and time, the fixture ID (the pack fixture 50), the event ID (restock), the brand ID (the brand ID of the stock brand), and the number of pack products (the number of stocked pack products) are set.

If an operation ID indicating the third stock request operation and a JAN code of a carton product are acquired from the fixture management terminal 56, the fixture management unit 101 identifies brand information storing the JAN code as a carton code, from the by-store brand information table in the product management DB 105. At the time of restocking a tobacco product, since the target brand information can be identified, the fixture management unit 101 transmits a stock instruction including the brand ID in the brand information to the second control unit 40. Thus, in the carton fixture 60, carton-position reporting LEDs 62 reporting the position of a storage region to which the brand ID of the stock brand is assigned are turned on, the lock mechanism of the drawer 61 having the storage region is set to unlocked state, and a carton product can be restocked in the storage region.

Subsequently, upon being notified of stock completion from the second control unit 40, the fixture management unit 101 adds a record regarding stock of the carton product to the fixture event log in the product management DB 105. In this record, the date and time, the fixture ID (the carton fixture 60), the event ID (restock), the brand ID (the brand ID of the stock brand), and the number of carton products (the number of stocked carton products) are set.

If an operation ID indicating the first stock request operation and a brand ID of a stock brand are acquired from the fixture management terminal 56, the fixture management unit 101 first transmits a dispensing instruction including the brand ID of the stock brand to the second control unit 40. Thus, in the carton fixture 60, carton-position reporting LEDs 62 reporting the position of the storage region storing the carton product of the stock brand are turned on, the lock mechanism of the drawer 61 having the storage region is set to unlocked state.

Thus, an operator (a salesperson) can remove the carton product of the stock brand from the storage region in the drawer 61. Upon the detection sensor in the drawer 61 detecting removal of the carton product and upon reception of dispensing completion from the second control unit 40, the fixture management unit 101 can instruct the fixture management terminal 56 to start the barcode scanner.

In addition, at this time, in accordance with reception of dispensing completion, the fixture management unit 101 adds a record regarding dispensing of the carton product to the fixture event log in the product management DB 105.

An operator (a salesperson) unwraps the removed carton product to remove a plurality of pack products, and hovers a pack product over the scan window 55 of the pack fixture 50, and thereby the barcode scanner reads the JAN code from the pack product.

The fixture management unit 101 acquires the JAN code of the pack product of the stock brand from the fixture management terminal 56, identifies brand information in which the JAN code is set as a pack code from the by-store brand information table in the product management DB 105, and extracts a brand ID corresponding to the JAN code from the brand information. Thus, the fixture management unit 101 confirms that the brand ID that is acquired in advance together with the operation ID of the first stock request operation corresponds with the brand ID corresponding to the JAN code of the pack product, and transmits a dispensing instruction including the brand ID to the first control unit 30. Thus, in the pack fixture 50, a magazine 59 to which the brand ID of the stock brand is assigned is conveyed to the input magazine installation unit, the lock mechanism of the open/close door 53 is set to unlocked state, and a pack product can be restocked in the magazine 59.

Subsequently, upon being notified of stock completion from the first control unit 30, the fixture management unit 101 adds a record regarding stock of the pack product to the fixture event log in the product management DB 105.

Although the above-described second and third stock request operations are limited to the time of restocking a tobacco product, the second and third stock request devices are performed also at the time of newly stocking a tobacco product.

In this case, brand information that stores, as a pack code, a JAN code of a pack product transmitted from the fixture management terminal 56 is not stored in the by-store brand information table in the product management DB 105. In addition, brand information that stores, as a carton code, a JAN code of a carton product transmitted from the fixture management terminal 56 is not stored in the by-store brand information table either. In addition, a record in which a brand ID corresponding to the JAN code of the pack product or the carton product is set does not exist in the magazine management DB 35 and the storage region management DB 45 in the fixture setting information stored in the product management DB 105.

Thus, in response to the second stock request operation, by referring to the fixture setting information in the product management DB 105 (copies of the magazine management DB 35 and the storage region management DB 45), the fixture management unit 101 searches for a magazine 59 to which a brand is not assigned. Similarly, in response to the third stock request operation, the fixture management unit 101 searches for a storage region to which a brand is not assigned.

The magazine 59 to which a brand is not assigned can be identified by searching for magazine information in which a brand ID is not set in the magazine information stored in the magazine management DB 35. The storage region to which a brand is not assigned can be identified by searching for storage region information in which a brand ID is not set in the storage region information stored in the storage region management DB 45.

If the magazine 59 to which a brand is not assigned could be identified, the fixture management unit 101 transmits a stock instruction including a brand ID of the stock brand and the installed position of the unassigned magazine 59 to the first control unit 30, and subsequently, substantially the same process as that at the above-described time of restocking a tobacco product is performed.

On the other hand, if the storage region to which a brand is not assigned could be identified, the fixture management unit 101 transmits a stock instruction including a brand ID of the stock brand and the position of the unassigned storage region to the second control unit 40, and subsequently, substantially the same process as that at the above-described time of restocking a tobacco product is performed.

A brand ID of a new stock brand is acquired from the brand master table in the product management DB 105. Specifically, the fixture management unit 101 can identify, in the brand master table in the product management DB 105, brand information that stores, as a pack code, a JAN code of a pack product transmitted from the fixture management terminal 56, and can acquire a brand ID from the brand information as the brand ID of the new stock brand. In addition, the fixture management unit 101 can identify, in the brand master table in the product management DB 105, brand information that stores, as a carton code, a JAN code of a carton product transmitted from the fixture management terminal 56, and can acquire a brand ID from the brand information as the brand ID of the new stock brand.

However, there may be no magazine 59 or storage region to which a brand is not assigned. In this case, the fixture management unit 101 checks whether the renewal-or-discontinuation reservation information is set in the fixture setting information in the product management DB 105. The renewal-or-discontinuation reservation information is information that is set, in a menu displayed on the fixture management terminal 56, by an operator designating a brand that is currently being handled but to be no longer handled (referred to as renewed-or-discontinued brand) and, as described above, includes the brand ID of the renewed-or-discontinued brand.

If the renewal-or-discontinuation reservation information is set, the fixture management unit 101 transmits a collective dispensing instruction including the brand ID of the renewed-or-discontinued brand indicated by the renewal-or-discontinuation reservation information to the first control unit 30 and the second control unit 40. Thus, all pack products of the renewed-or-discontinued brand are dispensed from the pack fixture 50, and the positions of storage regions for all carton products of the renewed-or-discontinued brand are reported by carton-position reporting LEDs 62.

Once tobacco products of the renewed-or-discontinued brand are dispensed from the pack fixture 50 and the carton fixture 60 through the above-described collective dispensing processing, subsequently, substantially the same processing as that in the above-described case of performing the second or third stock request operation is performed. That is, the fixture management unit 101 transmits, to the first control unit 30 or the second control unit 40, a stock instruction including a brand ID of a new stock brand and the installed position of a magazine 59 or the position of a storage region where the renewed-or-discontinued brand has been assigned and collective dispensing has been performed, and thus, a tobacco product of the new stock brand can be stocked.

Regarding such processing, in other words, the fixture management unit 101 can also be referred to as a presentation processing means for causing, if a product stocker unit (a magazine 59 or a storage region) to which the brand indicated by the stocked brand identifier (the brand ID of the new stock brand) is assigned does not exist in the plurality of product stocker units (the magazines 59 or the storage regions) that are included in the product storage unit (the pack fixture 50 or the carton fixture 60) and that are capable of storing tobacco products in a classified manner according to brand, the product storage unit (the first control unit 30 or the second control unit 40) to present a product stocker unit (a magazine 59 or a storage region) to which the renewed-or-discontinued brand indicated by the renewal-or-discontinuation designation information (the renewal-or-discontinuation reservation information) has been assigned.

To cause the product storage unit to present the product stocker unit to which the renewed-or-discontinued brand is assigned herein means to indicate the product stocker unit such that an operator can grasp the target product stocker unit (the magazine 59 or the storage region). In the first embodiment, the above "presentation" is implemented by placing the target magazine 59 in the input magazine installation unit so as to be accessible by the operator by opening an open/close door 53, or by turning on carton-position reporting LEDs 62 for reporting the position of the target storage region and setting the lock mechanism of the drawer 61 having the storage region to unlocked state. The method for presenting the target product stocker unit is not limited to such examples.

Thus, in a case of newly stocking a brand, the renewed-or-discontinued brand to be replaced is designated, and thereby, the product stocker unit (the magazine 59 or the storage region) to which the renewed-or-discontinued brand is assigned is presented. This enables the operator to newly stock a tobacco product of the brand correctly and smoothly.

Furthermore, the fixture management unit 101 can also be referred to as a dispensing control means for controlling, if the product storage unit (the pack fixture 50 or the carton fixture 60) is caused to present the product stocker unit (the magazine 59 or the storage region), the product storage unit (the pack fixture 50 or the carton fixture 60) to dispense all stored tobacco products of the renewed-or-discontinued brand from the product stocker unit (the magazine 59 or the storage region) corresponding to the renewed-or-discontinued brand indicated by the renewal-or-discontinuation designation information (the renewal-or-discontinuation reservation information).

In the first embodiment, in the pack fixture 50, the product dispensing mechanism automatically performs collective dispensing of pack products from the magazine 59, and, in the carton fixture 60, the position of the storage region storing a carton product to be removed are reported by the carton-position reporting LEDs 62 so that an operator can remove the carton product of the renewed-or-discontinued brand. Note that a specific method for controlling the product storage unit to dispense all tobacco products of the renewed-or-discontinued brand is not limited to such examples. Also regarding the pack products, not only automatic dispensing, but also a display shelf of the pack products to be dispensed may be reported, and the carton products may be automatically dispensed.

Thus, after all tobacco products of the renewed-or-discontinued brand have been dispensed, a tobacco product of the brand to be newly stocked can be stocked, and thus can guide an operator (a salesperson) to be able to newly stock a tobacco product correctly and smoothly.

On the other hand, if the renewal-or-discontinuation reservation information is not set, the fixture management unit 101 instructs the management operation processing unit 104, which will be described later, to cause the fixture management terminal 56 to display a renewed-or-discontinued brand selection screen. Subsequently, based on a brand ID of a renewed-or-discontinued brand included in the renewal-or-discontinuation designation information transmitted from the fixture management terminal 56, the fixture management unit 101 transmits a collective dispensing instruction including the brand ID to the first control unit 30 and the second control unit 40. Subsequently, substantially the same processing as that in a case in which the renewal-or-discontinuation reservation information is set is performed.

The order-terminal management unit 103 manages the order terminal 20 and particularly manages various screens displayed on the order terminal 20. In the first embodiment, the order-terminal management unit 103 generates or updates screen data of the brand selection screen to be displayed on the order terminal 20 and transmits the screen data to the order terminal 20.

For example, if a tobacco product of the above-described new stock brand is stocked, the order-terminal management unit 103 automatically updates the screen data of the brand selection screen and transmits the updated screen data to the order terminal 20 so that a tobacco product of the new stock brand can be selected on the brand selection screen on the order terminal 20. In addition, if collective dispensing of tobacco products of the renewed-or-discontinued brand is performed, the order-terminal management unit 103 automatically updates the screen data of the brand selection screen and transmits the updated screen data to the order terminal 20 so that no tobacco product of the renewed-or-discontinued brand can be selected on the brand selection screen on the order terminal 20.

The order-terminal management unit 103 acquires a brand ID of a new stock brand from the fixture management unit 101, and, by referring to the ordering face information stored in the product management DB 105, determines whether brand information corresponding to the brand ID is included in the brand selection screen. This determination corresponds with determination as to whether the order terminal 20 is capable of displaying brand information of a tobacco product of the new stock brand. Thus, the order-terminal management unit 103 can also be referred to as a determination means for determining, based on the stocked brand identifier, whether the order terminal 20 is capable of displaying brand information of a tobacco product of a brand indicated by the stocked brand identifier.

However, since a tobacco product of the new stock brand has not been stored in the pack fixture 50 or the carton fixture 60, an order cannot be accepted on the order terminal 20, and, as a result, brand information of the new stock brand is not included in the brand selection screen in normal state. Thus, the above-described determination by the order-terminal management unit 103 is not necessarily performed.

In this case, determination performed by the fixture management unit 101 as to whether brand information storing, as a pack code, a JAN code of a pack product or brand information storing, as a carton code, a JAN code of a carton product transmitted from the fixture management terminal 56 is stored in the by-store brand information table in the product management DB 105 can be regarded as determination, based on the stocked brand identifier, as to whether the order terminal 20 is capable of displaying brand information of a tobacco product of a brand indicated by the stocked brand identifier. That is, the fixture management unit 101 can also be referred to as the above-described determination means.

If brand information corresponding to the brand ID of the new stock brand is not included in the brand selection screen, that is, if the order terminal 20 is incapable of displaying the brand information corresponding to the brand ID, the order-terminal management unit 103 extracts the brand information corresponding to the brand ID from the brand master table in the product management DB 105 and, based on the extracted brand information, updates the screen data of the brand selection screen. Thus, the order-terminal management unit 103 can also be referred to as an extraction means for extracting, based on a determination result obtained by the above-described determination means, from the brand master storage unit (the brand master table) storing master information regarding brands of tobacco products, the brand information of the tobacco product of the brand indicated by the stocked brand identifier (the brand ID of the new stock brand).

Note that the method for updating the screen data of the brand selection screen by the order-terminal management unit 103 will be described later.

The order-terminal management unit 103 transmits the updated screen data of the brand selection screen to the order terminal 20. Thus, by using the screen data, ordering a tobacco product of the new stock brand is enabled on the brand selection screen on the order terminal 20.

In order to change the brand selection screen, herein, the screen data transmitted from the order-terminal management unit 103 to the order terminal 20 and the display method of the changed brand selection screen on the order terminal 20 may have various forms, and the first embodiment does not limit these. For example, brand information including the brand name, the brand image, and the like and position information for displaying the brand information are transmitted to the order terminal 20 as the screen data, and based on the screen data, the brand selection screen may be automatically changed on the order terminal 20, and the changed brand selection screen may be displayed. In addition, the order-terminal management unit 103 may generate web page data of the brand selection screen in HTML (HyperText Markup Language), XML (Extensible Markup Language), or the like, may transmit the data to the order terminal 20, and the order terminal 20 may read the data and display the brand selection screen in a browser.

Thus, the order-terminal management unit 103 can also be referred to as a transmission means for transmitting, to the order terminal 20, at least part (e.g., image or name) of the brand information corresponding to the brand ID of the new stock brand extracted from the brand master table in order to cause the order terminal 20 to display the updated brand selection screen.

Furthermore, the order-terminal management unit 103 desirably transmits, to the order terminal 20, the brand information for causing the order terminal 20 to display the updated brand selection screen after a tobacco product of the new stock brand has been stocked in the pack fixture 50 or the carton fixture 60.

In the above manner, it is possible to prevent an event of placing an order via the order terminal 20 before a tobacco product of the new stock brand is stored in the pack fixture 50 or the carton fixture 60, and an operator (a salesperson) can be prevented from being confused.

In this case, specifically, after having been notified of stock completion of a tobacco product of the new stock brand from the first control unit 30 or the second control unit 40, the order-terminal management unit 103 may transmit screen data of the updated brand selection screen to the order terminal 20.

In addition, if collective dispensing of tobacco products of a renewed-or-discontinued brand is performed, the order-terminal management unit 103 acquires a brand ID of the renewed-or-discontinued brand from the fixture management unit 101, and, by referring to the ordering face information stored in the product management DB 105, determines whether brand information corresponding to the brand ID is included in the brand selection screen. This determination corresponds with determination as to whether the order terminal 20 is capable of displaying brand information of a tobacco product of the renewed-or-discontinued brand. Thus, the order-terminal management unit 103 can also be referred to as a determination means for determining, based on the brand ID of the renewed-or-discontinued brand, whether the order terminal 20 is capable of displaying brand information of a tobacco product of the renewed-or-discontinued brand.

However, since ordering of the tobacco product of the renewed-or-discontinued brand has been accepted on the order terminal 20, brand information of the renewed-or-discontinued brand is not included in the brand selection screen in normal state. Thus, the above-described determination by the order-terminal management unit 103 is not necessarily performed.

If brand information corresponding to the brand ID of the renewed-or-discontinued brand is included in the brand selection screen, that is, if the order terminal 20 is capable of displaying the brand information corresponding to the brand ID, the order-terminal management unit 103 updates the screen data of the brand selection screen and transmits the updated screen data of the brand selection screen to the order terminal 20 so that no tobacco product of the renewed-or-discontinued brand can be selected on the brand selection screen. Thus, by using the screen data, ordering of a tobacco product of the renewed-or-discontinued brand is disenabled on the brand selection screen on the order terminal 20.

Herein, various methods exist as a method for disenabling selection of a tobacco product of the renewed-or-discontinued brand on the brand selection screen. For example, the brand information of a tobacco product of the renewed-or-discontinued brand may refrain from being displayed on the brand selection screen, or an operation for the brand information may be made unacceptable while the brand information is displayed.

In addition, in a case of disenabling selection (designating operation) of a tobacco product of the renewed-or-discontinued brand on the brand selection screen, various forms are possible for the screen data to be transmitted from the order-terminal management unit 103 to the order terminal 20. For example, an instruction including the brand ID of the renewed-or-discontinued brand may be transmitted as the screen data from the order-terminal management unit 103 to the order terminal 20, and, in accordance with the instruction, the order terminal 20 may update the brand selection screen. Alternatively, the order-terminal management unit 103 may generate screen data of the brand selection screen on which selection of a tobacco product of the renewed-or-discontinued brand is disenabled and may transmit the screen data to the order terminal 20.

Thus, the order-terminal management unit 103 can also be referred to as a transmission means for transmitting, to the order terminal 20, information that disenables acceptance of a designating operation of the renewed-or-discontinued brand on the order terminal 20 if a tobacco product of the renewed-or-discontinued brand is dispensed. Specific details of the information to be transmitted to the order terminal 20 at this time are not limited.

In the above manner, if it is decided to stop providing a tobacco product, collective dispensing of tobacco products of the renewed-or-discontinued brand is performed in the pack fixture 50 and the carton fixture 60, and also, ordering a tobacco product of the renewed-or-discontinued brand on the order terminal 20 is disenabled. Thus, even when providing a tobacco product is stopped, smooth store management is possible without confusing a salesperson.

The management operation processing unit 104 manages the fixture management terminal 56 and, in particular, controls display or the like of the fixture management terminal 56, manages information regarding the pack fixture 50 or the carton fixture 60 set by an operation on the fixture management terminal 56, or the like.

For example, if the ordered brand information is acquired from the order terminal 20 while a tobacco product is in the process of being stocked, as described above, the management operation processing unit 104 causes the fixture management terminal 56 to output display for reporting that an order is placed.

In addition, if a certain brand is selected and a reservation for stopping providing the brand is selected on the menu displayed on the fixture management terminal 56, the management operation processing unit 104 acquires the renewal-or-discontinuation reservation information including a brand ID of the brand from the fixture management terminal 56 and sets the acquired renewal-or-discontinuation reservation information in the fixture setting information in the product management DB 105.

Furthermore, if the renewal-or-discontinuation reservation information is not set when stocking a tobacco product of a new stock brand, the management operation processing unit 104 instructs the fixture management terminal 56 to display a brand list for making an operator select a renewed-or-discontinued brand. Thus, the fixture management terminal 56 displays the brand list to make the operator select a renewed-or-discontinued brand, and the management operation processing unit 104 acquires, from the fixture management terminal 56, the renewal-or-discontinuation designation information including a brand ID of the selected renewed-or-discontinued brand.

From the above, the management operation processing unit 104 can be referred to as a renewal-or-discontinuation information acquisition means for acquiring renewal-or-discontinuation designation information that designates a renewed-or-discontinued brand of tobacco product to be replaced with another of tobacco product brand in the product storage unit (the pack fixture 50 or the carton fixture 60). The renewal-or-discontinuation designation information includes the renewal-or-discontinuation reservation information.

### [Brand Selection Screen]

Now, the method by which the order-terminal management unit 103 updates screen data of the brand selection screen will be described below in detail.

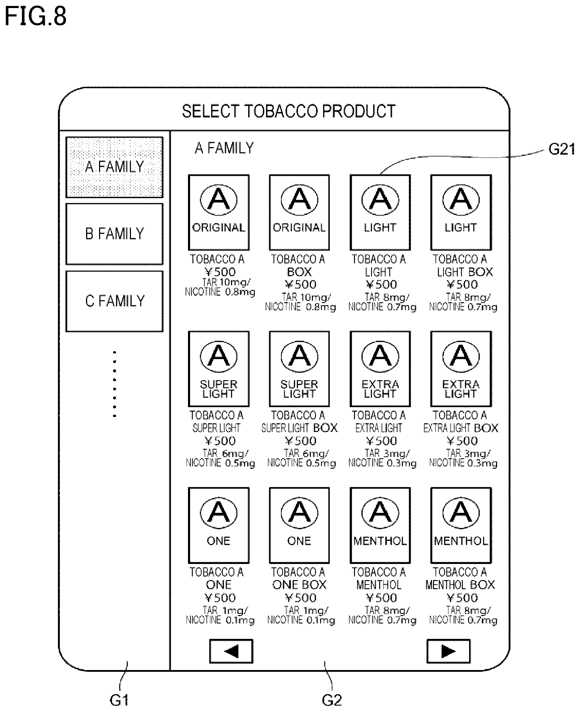

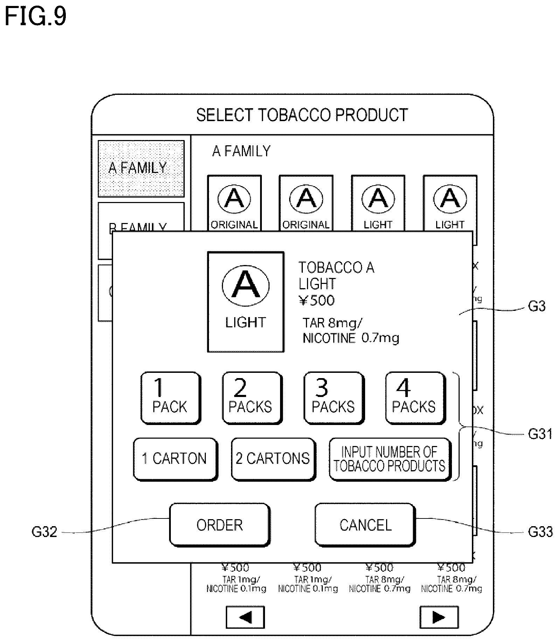

Before the description, first, an ordering operation performed by a customer or a salesperson on the order terminal 20 and the brand selection screen displayed on the order terminal 20 will be described with reference to Fig. 8 and Fig. 9.

Fig. 8 illustrates an example of the brand selection screen, and Fig. 9 illustrates an example of a brand ordering screen.

The brand selection screen displayed on the order terminal 20 is formed of a brand group selection part G1 for selecting a brand group and an individual brand selection part G2 for displaying brand information of tobacco products of a plurality of brands that belong to the brand group selected in the brand group selection part G.

In this manner, the brands of tobacco products are classified into brand groups according to common name (brand name) included in the brand names. In the example in Fig. 8, the brand group "A family" including the common brand name "A" in the brand names is selected in the brand group selection part G, and brand information of tobacco products of all brands including the common brand name "A" is displayed in predetermined arrangement in the individual brand selection part G2. If all the brand information cannot be displayed on a single screen, a brand information group that is a subset of the brand group "A family" is sequentially displayed by scrolling or the like.

That is, the brand selection screen classifies the brand information of the tobacco products of the plurality brands by a plurality of brand groups, and displays the brand information of each tobacco product in arrangement determined for each brand group.

A customer or a salesperson presses an image part of a desired brand on the brand selection screen, and thereby a brand ordering screen G3 illustrated in Fig. 9 is displayed as a pop-up window.

The brand ordering screen is a screen for confirming an order of a tobacco product of the brand selected on the brand selection screen and includes the brand information of a tobacco product of the selected brand and also includes an order unit designating part G31, an order confirmation operation part G32, and an order cancellation operation part G33.

The order unit designating part G31 includes buttons such that, as the number of pack products to order, "1 pack", "2 packs", "3 packs", or "4 packs", or, as the number of carton products to order, "1 carton" or "2 cartons" can be designated by one operation. Thus, a customer or a salesperson can input an order unit and the number of tobacco products by a simple operation without performing a complex operation such as inputting the number of tobacco products. On the other hand, if they wish to designate the number other than the order unit, by selecting "input number of tobacco products", another screen for inputting the number of pack products or carton products is displayed.

Upon the order confirmation operation part G32 being pressed, a customer or a salesperson can order a tobacco product of the selected brand with the designated order unit and number. At this time, the order terminal 20 transmits, to the management PC 10, the ordered brand information including a brand ID of the selected brand, an order unit ID indicating either or both of a pack product and a carton product, and the number thereof. Thus, based on the ordered brand information, the tobacco product of the brand is dispensed from the pack fixture 50 or the carton fixture 60.

On the other hand, upon the order cancellation operation part G33 being pressed, the brand ordering screen G3 disappears, and the selected brand, number, and the like are cleared.

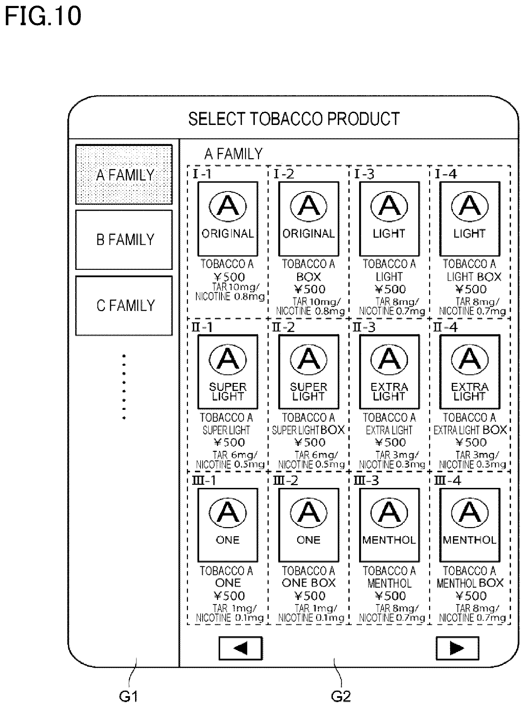

Fig. 10 schematically illustrates an arrangement example of pieces of brand information on the brand selection screen.

The arrangement of the brand information for each brand group on the brand selection screen is determined as (I-1), (I-2), or (I-3) illustrated in Fig. 10, for example.

Thus, based on brand information of a new stock brand extracted from the brand master table in the product management DB 105, the order-terminal management unit 103 can determine the arrangement of the brand information on the brand selection screen. At this time, the order-terminal management unit 103 may use at least one of the brand name, the price, the tar amount, and the nicotine amount included in the brand information.

For example, the brand group to which the new stock brand belongs may be determined based on which brand group includes a common brand name that is the same as the brand name or the like. It is needless to say that the brand information may include a group ID for identifying a brand group, and the brand group to which the new stock brand belongs may be determined by using the group ID.

Alternatively, by using the price, the arrangement of the new stock brand may be determined so as to be adjacent to another brand of the same price; by using the tar amount, the nicotine amount, or a smoke taste, the arrangement of the new stock brand may be determined so as to be adjacent to another brand having a close tar amount or nicotine amount or a close smoke taste.

In addition to the above-described unchangeable brand information stored in the brand master table, if the brand information that may be updated at any time, such as campaign information or sales ranking information, can be acquired based on a brand ID of the new stock brand, the arrangement of the new stock brand may be determined by using such brand information that may be updated at any time.

In the brand information, information such as the brand name, the price, the tar amount, the nicotine amount, or the smoke taste may also be referred to as unchangeable attribute information of the tobacco product, and information such as campaign information or sales ranking information may also be referred to as changeable attribute information of the tobacco product. Furthermore, in the brand information, the tar amount, the nicotine amount, and the smoke taste may also be referred to as physical property information of the tobacco product, and information such as campaign information or sales ranking information may also be referred to as additional information of the tobacco product for it is information to be added to the tobacco product.

The above-described brand information (changeable attribute information) that may be updated at any time may be stored in the brand master table and updated at any given timing, or may be acquired from an external server device.

Thus, the order-terminal management unit 103 may be referred to as an arrangement determination means for determining, by using the brand information of the tobacco product of the brand indicated by the stocked brand identifier, arrangement of the brand information of the tobacco product of the brand indicated by the stocked brand identifier on a brand selection screen displayed on the order terminal 20. In addition, the order-terminal management unit 103 can also be referred to as an arrangement determination means for determining, by using at least one of the brand name, the price, the tar amount, the nicotine amount, the smoke taste, the campaign information, and the sales ranking information, which are included in the brand information of the tobacco product of the brand indicated by the stocked brand identifier, arrangement of the brand information of the tobacco product of the brand indicated by the stocked brand identifier on the brand selection screen displayed on the order terminal 20. Furthermore, the order-terminal management unit 103 can also be referred to as an arrangement determination means for determining, by using at least part of the unchangeable attribute information, the changeable attribute information, the physical property information, and the additional information of the tobacco product, which are included in the brand information of the tobacco product of the brand indicated by the stocked brand identifier, arrangement of the brand information of the tobacco product of the brand indicated by the stocked brand identifier on the brand selection screen displayed on the order terminal 20.

Furthermore, when determining the arrangement of the brand information of the tobacco product, the order-terminal management unit 103 can change arrangement of existing brand information that has already been arranged on the brand selection screen.

For example, in the example in Fig. 10, if brand information of a new stock brand including the brand name "tobacco A middle", the price "500 yen", the tar amount "9 mg", and the nicotine amount "0.7 mg" is acquired, by using the tar amount and the nicotine amount, the order-terminal management unit 103 can determine the arrangement of the brand information of the new stock brand to (I-3) to be inserted between existing "tobacco A BOX" and "tobacco A LIGHT". At this time, the order-terminal management unit 103 may determine to shift the arrangement of the existing brand information by changing the arrangement of the existing brand "tobacco A LIGHT" to (I-4) and changing the arrangement of the brand "tobacco A LIGHT BOX" to (II-1).

In this case, the order-terminal management unit 103 may transmit information (including information indicating the changed arrangement of the existing brand information) indicating the arrangement determined in this manner to the order terminal 20. The information to be transmitted may be updated screen data of the brand selection screen itself, the changed arrangement information and the brand information of the new stock brand, or other information.

In the above manner, based on at least one of the brand name, the price, the nicotine amount, and the tar amount, which are included in the brand information of the new stock brand, the arrangement of the brand information of the new stock brand and the arrangement of the existing brand information on the brand selection screen are determined. Thus, the brand selection screen can be uprated without complexity with arrangement that makes selection by a customer or a salesperson easy.

Note that, in addition to enabling selection of a brand by using the brand selection screen illustrated in Fig. 8, the order terminal 20 supports the following brand selection method.

For example, there is a method in which the barcode scanner of the order terminal 20 is made to read a JAN code of a desired tobacco product for selecting a brand. In this case, in addition to the order unit and the number, the order terminal 20 may transmit the read JAN code to the management PC 10, or may convert the JAN code into a brand ID and transmit the brand ID to the management PC 10.

There is also a method of using a dedicated application installed in a mobile terminal of a customer, such as a smartphone, for selecting a brand. For example, by starting the application, a barcode or a two-dimensional code (e.g., QR code (registered trademark)) encoding a JAN code or a brand ID corresponding to a tobacco product of a brand that the customer wises to order may be displayed and read by the barcode scanner of the order terminal 20. Alternatively, by starting the application, the JAN code or the brand ID corresponding to the tobacco product of the brand that the customer wishes to order may be transmitted to the order terminal 20 via NFC communication.

Furthermore, a brand ID of a customer's mainly smoked brand may be stored in advance in the management PC 10, customer authentication may be performed by using the customer's mobile terminal or biological information, and if verification is successful, an order may be placed by using the brand ID stored in advance. In this case, the management PC 10 can acquire a mobile terminal ID or biological information (e.g., vein recognition) from the order terminal 20 to perform customer authentication.

In a case of performing such customer authentication, in addition to the brand ID of the mainly smoked brand, adult information can be obtained, and thus, customer authentication can also serve as adult authentication.

By such a brand selection method, without displaying the brand selection screen, the order terminal 20 can display the brand ordering screen G3 directly to make the order unit and the number be selected. Furthermore, information regarding the order unit and the number may also be transmitted to the order terminal 20 by using an application of a mobile terminal or may also be stored in advance in the management PC 10.

Furthermore, the order terminal 20 is capable of displaying a display screen such as the brand selection screen in multiple languages, such as Japanese, English, and Chinese. For example, by using a mobile ID acquired from the customer's mobile terminal via NFC communication, a customer ID obtained through the above-described customer authentication, or the like, the order terminal 20 may identify the customer's language information held in advance in association with such an ID, and may automatically switch the language on the display screen in the language corresponding to the identified language information. The order terminal 20 may also obtain the customer's language information directly from the customer's mobile terminal.

### [Fixture Management Menu]

Next, the fixture management menu displayed on the fixture management terminal 56 will be described.

The fixture management menu includes a stock request menu, a renewed-or-discontinued brand selection menu, and the like. Now, the stock request menu and the renewed-or-discontinued brand selection menu, which are parts of the fixture management menu, will be described below.

The stock request menu includes a menu for selecting a restock brand by a screen operation, a "restock pack product by scanning" menu, "restock carton product by scanning" menu, and the like.

Upon the menu for selection by a screen operation being executed, the brand list is displayed and an operator is made to select a brand to restock. An operator operation in accordance with the menu corresponds to the above-described first stock request operation.

Upon the restock pack product by scanning" menu or the "restock carton product by scanning" menu being executed, the barcode scanner of the pack fixture 50 is started, and a barcode attached to the wrapping of a tobacco product can be read. An operator operation in accordance with these menus corresponds to the above-described second or third stock request operation.

Upon the renewed-or-discontinued brand selection menu being executed, the renewed-or-discontinued brand selection screen is displayed so as to make a brand (the renewed-or-discontinued brand) be selected, the brand being currently handled but to be no longer handled. The renewed-or-discontinued brand selection screen includes a brand list, and if this menu is executed unless a tobacco product is newly stocked, the brand selected from the brand list is set to a renewed-or-discontinued brand reservation state. That is, as described above, the renewal-or-discontinuation reservation information including a brand ID of the selected brand is transmitted from the fixture management terminal 56 to the management PC 10 and stored therein.

In addition, the renewed-or-discontinued brand selection screen may also be displayed when a tobacco product is newly stocked. In this case, as described above, the renewal-or-discontinuation reservation information including a brand ID of the selected brand is transmitted from the fixture management terminal 56 to the management PC 10.

### [Operation Example of Management PC 10]

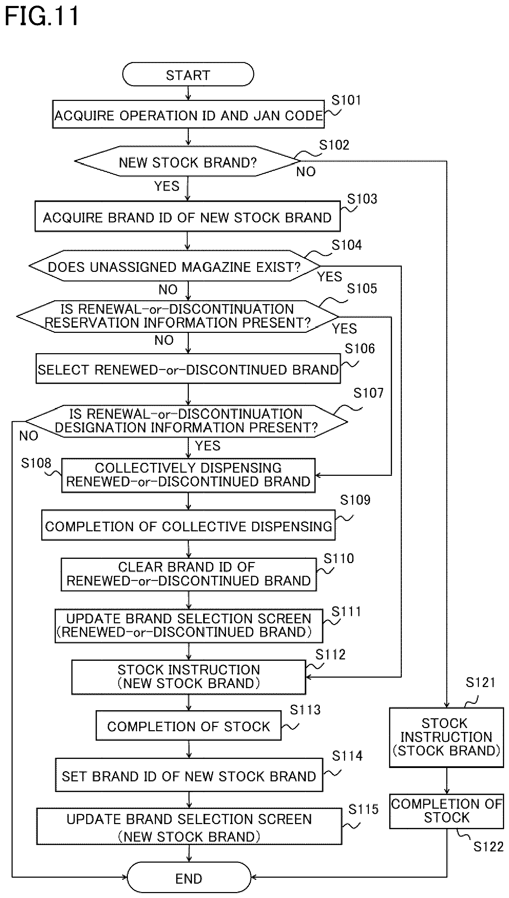

Next, an operation example of the management PC 10 in the first embodiment will be described. In particular, an operation example of the management PC 10 in a case in which the second and third stock request operations are performed on the fixture management terminal 56 will be described with reference to Fig. 11. Fig. 11 is a flowchart illustrating the operation example of the management PC 10.

An assumed case herein is a case in which the second stock request operation is performed on the fixture management terminal 56, that is, a case in which the "restock pack product by scanning" menu is executed, and a pack product is hovered over the scan window 55 of the pack fixture 50.

The management PC 10 (the fixture management unit 101) acquires an operation ID indicating the second stock request operation and a JAN code of a pack product from the fixture management terminal 56 (S101).

Based on the acquired JAN code, the management PC 10 determines whether the pack product is a pack product of a new stock brand (S102). Specifically, the management PC 10 searches the by-store brand information table in the product management DB 105 for brand information storing the JAN code as a pack code (S102). If the by-store brand information table stores the brand information, it is determined that the brand is currently handled in the subject store and is not a new stock brand. In contrast, if the by-store brand information table does not store the brand information, it is determined that the brand is not currently handled in the subject store and is a new stock brand.

If the brand is not a new stock brand (S102; NO), the management PC 10 extracts a brand ID corresponding to the acquired JAN code from the by-store brand information table, and transmits a stock instruction including the brand ID to the first control unit 30 (S121).

In accordance with this, based on the brand ID included in the stock instruction, by referring to the magazine management DB 35, the first control unit 30 (the conveyance control unit 32) identifies the installed position of a magazine 59 associated with the brand ID, and conveys the magazine 59 at the identified installed position to the input magazine installation unit. Furthermore, the first control unit 30 sets the lock mechanism of the open/close door 53 for externally exposing the input magazine installation unit to unlocked state.

An operator opens the open/close door 53 and restocks a pack product in the magazine 59. Upon the open/close door 53 being closed, the lock mechanism of the open/close door 53 is set to locked state. Subsequently, the product sensor senses the height of stacked pack products in the magazine 59, and, based on the sensing information from the product sensor, the first control unit 30 (the magazine management unit 33) detects the number of stored pack products, can detect stock of the pack product from the difference from the original remaining number stored in the magazine management DB 35, and can notify the management PC 10 of the number of stocked pack products together with stock completion.

Upon being notified of the stock completion from the first control unit 30 (S 122), the management PC 10 ends the process. At this time, the management PC 10 can add a record regarding stock of the pack product in the fixture event log in the product management DB 105.

In addition, the installed position of the conveyed magazine 59 and the remaining number are updated in the magazine management DB 35 in the first control unit 30 and are also reflected in the magazine management DB 35 in the fixture setting information in the product management DB 105 in the management PC 10.

If the brand is a new stock brand (S102; YES), the management PC 10 acquires a brand ID corresponding to the acquired JAN code from the brand master table in the product management DB 105 (S 103). Note that the brand ID is not set in the by-store brand information table.

Subsequently, the management PC 10 checks whether a magazine 59 to which a brand is not assigned exists in the pack fixture 50 (S104). Specifically, the management PC 10 searches the magazine information stored in the magazine management DB 35 in the fixture setting information in the product management DB 105, for the magazine information in which a brand ID is not set (S104). If the magazine information in which a brand ID is not set exists, a magazine 59 to which a brand is not assigned exists; if the magazine information does not exist, the magazine 59 does not exist.

If the magazine 59 to which a brand is not assigned exists (S104; YES), the management PC 10 extracts the installed position of the magazine 59 from the above-described magazine information in which a brand ID is not set, and transmits a stock instruction including the installed position of the magazine 59 and the brand ID of the new stock brand acquired in (S103) to the first control unit 30 (S112).

In accordance with this, by using the installed position of the magazine 59 included in the stock instruction, the first control unit 30 (the conveyance control unit 32) conveys the magazine 59 at the installed position to the input magazine installation unit. The subsequent processing of the first control unit 30 is as described above for (S121).

Upon being notified of stock completion from the first control unit 30 (S113), the management PC 10 extracts brand information corresponding to the brand ID of the new stock brand acquired in (S103) from the brand master table, and adds the brand information to the by-store brand information table (S114). Furthermore, the management PC 10 sets the brand ID of the new stock brand in a record corresponding to the target magazine 59 in the magazine management DB 35 in the fixture setting information in the product management DB 105 (S114).

Furthermore, the management PC 10 (the order-terminal management unit 103) automatically updates screen data of the brand selection screen so that a tobacco product of the new stock brand can be selected on the brand selection screen on the order terminal 20, and transmits the updated screen data to the order terminal 20 (S115). Update of the screen data of the brand selection screen and transmission of the screen data to the order terminal 20 are as described above.

If the magazine 59 to which a brand is not assigned is not present (S104; NO), the management PC 10 (the fixture management unit 101) checks whether renewal-or-discontinuation reservation information is set in the fixture setting information in the product management DB 105 (S105).

If the renewal-or-discontinuation reservation information is present (S105; YES), the management PC 10 transmits a collective dispensing instruction including a brand ID of a renewed-or-discontinued brand indicated by the renewal-or-discontinuation reservation information to the first control unit 30 and the second control unit 40 (S108).

In accordance with this, the first control unit 30 identifies magazine information in which the brand ID of the renewed-or-discontinued brand is set from the magazine management DB 35, and, based on the installed position of the magazine 59 set in the magazine information, operates the dispensing mechanism. Thus, all pack products are dispensed from one or more magazines 59 that store pack products of the renewed-or-discontinued brand. Upon detection of dispensing of all pack products of the renewed-or-discontinued brand from sensing information from the dispensing sensor, the first control unit 30 notifies the management PC 10 of collective dispensing completion.

On the other hand, the second control unit 40 identifies the storage region information in which a brand ID of the renewed-or-discontinued brand is set from the storage region management DB 45, and turns on carton-position reporting LEDs 62 that report the position of a storage region set in the storage region information. Subsequently, based on sensing information from the detection sensor, upon confirmation that carton products are removed from all storage regions in which the carton products of the renewed-or-discontinued brand have been stored, the second control unit 40 (the position report processing unit 41) notifies the management PC 10 of collective dispensing completion.

Upon being notified of collective dispensing completion from the first control unit 30 and the second control unit 40 (S109), the management PC 10 deletes the brand information corresponding to the brand ID of the renewed-or-discontinued brand from the by-store brand information table (S110). Furthermore, the management PC 10 clears the brand ID of the renewed-or-discontinued brand set in the magazine information in the magazine management DB 35 in the fixture setting information in the product management DB 105 (S110), and clears the brand ID of the renewed-or-discontinued brand set in the storage region information in the storage region management DB 45 (S110).

Furthermore, the management PC 10 (the order-terminal management unit 103) automatically updates screen data of the brand selection screen so that no tobacco product of the renewed-or-discontinued brand can be selected on the brand selection screen on the order terminal 20, and transmits the updated screen data to the order terminal 20 (S111). Update of the screen data of the brand selection screen and transmission of the screen data to the order terminal 20 are as described above.

Subsequently, the management PC 10 (the fixture management unit 101) acquires the installed position of the magazine 59 set in the magazine information in which the brand ID of the renewed-or-discontinued brand is cleared in the magazine management DB 35 in (S110), and transmits a stock instruction including the installed position and the brand ID of the new stock brand to the first control unit 30 (S112). The subsequent operations of the first control unit 30 and the management PC 10 are substantially the same as the above-described (S113), (S114), and (SI15).

If the renewal-or-discontinuation reservation information is not present (S105; NO), the management PC 10 (the order-terminal management unit 103) causes the fixture management terminal 56 to display a renewed-or-discontinued brand selection screen. In accordance with this, the fixture management terminal 56 displays the renewed-or-discontinued brand selection screen.

Upon selection of a renewed-or-discontinued brand from the brand list on the renewed-or-discontinued brand selection screen, the management PC 10 acquires the renewal-or-discontinuation designation information including a brand ID of the renewed-or-discontinued brand from the fixture management terminal 56 (S107; YES). On the other hand, if the renewed-or-discontinued brand is not selected and cancellation is performed on the renewed-or-discontinued brand selection screen, the management PC 10 does not acquire the renewal-or-discontinuation designation information (S107; NO) and ends processing. Thus, a tobacco product of a new stock brand is not newly stocked.

Upon acquisition of the renewal-or-discontinuation designation information (S107; YES), the management PC 10 transmits a collective dispensing instruction including a brand ID of the renewed-or-discontinued brand included in the renewal-or-discontinuation designation information to the first control unit 30 and the second control unit 40 (S108). Thus, pack products and carton products of the renewed-or-discontinued brand are dispensed, and the subsequent operations of the first control unit 30, the second control unit 40, and the management PC 10 are substantially the same as the above-described (109), (S110), (S111), (S112), (S113), (S114), and (S115).

### [Second Embodiment]

Now, a tobacco product management system (subject system) 2 according to a second embodiment will be described below. Regarding the subject system 2, details different from those in the first embodiment will be mainly described below, and the same details as those in the first embodiment will be omitted as appropriate.

A system configuration of the subject system 2 is substantially the same as the configuration according to the first embodiment illustrated in Fig. 1. Note that, in the subject system 2, a pack fixture has a different form from that in the first embodiment, and does not have an automatic dispensing function but reports the display position of a pack product. Thus, the second embodiment illustrates the pack fixture 80 to be distinguished from the pack fixture 50 in the first embodiment. In addition, the fixture management terminal 56 in the subject system 2 is a display device of the management PC 10 and is a touch panel.

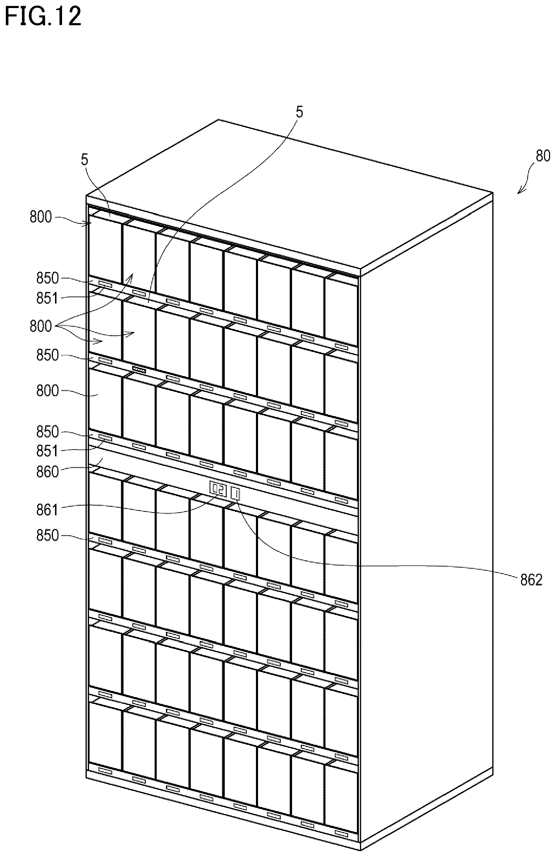

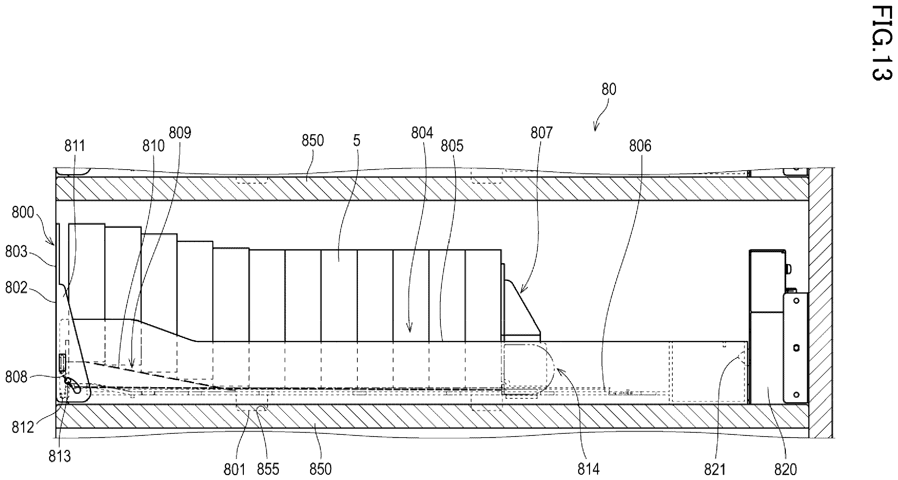

Fig. 12 is a perspective view of the pack fixture 80 in the second embodiment, and Fig. 13 is a side view of an enlarged part of the pack fixture 80 in the second embodiment and illustrates a magazine 800 and a portion therearound.

One or more pack fixtures 80 are stacked on one or the carton fixture 60. In the following description, for easy understanding of the description, one pack fixture 80 will be described.

The pack fixture 80 includes shelf boards 850 in a plurality of levels that can support a plurality of magazines 800 to be arranged side by side. In the example in Fig. 12 and Fig. 13, the pack fixture 80 includes shelf boards 850 in seven levels, and eight magazines 800 are supported on each of the shelf boards 850 to be arranged side by side. The number of levels of shelf boards 850 included in the pack fixture 80 and the number of magazines 800 supported on the shelf boards 850 are not limited to such examples.

On a top surface of a shelf board 850, insertion recess parts 855, having a shape into which projection parts 801 of a magazine 800 can be inserted, are formed at positions corresponding to the respective projection parts 801 (see Fig. 13). That is, in a state where the magazines 800 are mounted on the shelf boards 850, each projection part 801 is configured to be inserted into a corresponding one of the insertion recess parts 855. Thus, the magazines 800 can be mounted on the shelf boards 850 in a state of being positioned in the horizontal direction.

The magazines 800 are arranged side by side at equal intervals on the shelf boards 850, and in this arrangement state, front wall portions 803 of flaps 802 of the magazines 800 are flush with each other. In addition, the front wall portions 803 of the flaps 802 of the magazines 800 are flush with front end surfaces of the shelf boards 850.

A magazine 800 includes a mounting part 804, a pressure slider 807, and a wire-rod reel 814. The mounting part 804 can mount a plurality of pack products 5 in the front-to-back direction. The pressure slider 807 is provided to be movable back and forth along the mounting part 804. The wire-rod reel 814 urges the pressure slider 807 forward.

The mounting part 804 is a box-shaped container that is elongated in the front-to-back direction and that is open upward and can mount the plurality of pack products 5 that are positioned upright and arranged in line. That is, the pack products 5 are mounted on the mounting part 804 to have a posture elongated in the vertical direction and thick in the front-to-back direction.

The mounting part 804 is formed of a mounting part main body 805 and a flap 802 provided on the front end portion of the mounting part main body 805.

The mounting part main body 805 includes a bottom portion 806 and a front plate portion 808. The bottom portion 806 supports the plurality of pack products 5 to face forward in a slidable manner. The front plate portion 808 controls further forward movement of a pack product 5 at the front that has been pushed by the pressure slider 807 and reached at the front end portion of the bottom portion 806. The front plate portion 808 stands upright at the front end of the mounting part main body 805, and the plate surface thereof faces in the front-to-back direction.

In addition, a bottom raising member 809 is detachably attached to the mounting part main body 805. Fig. 13 illustrates an example in which the bottom raising member 809 is attached to the mounting part main body 805.

The bottom raising member 809 has a second bottom portion 810 that supports an item to face forward in a slidable manner. By attaching the bottom raising member 809 to the mounting part main body 805, the upper end position of the pack product 5 at the front end portion of the magazine 800 can be higher than in a case in which the bottom raising member 809 is not used. Thus, if pack products 5 to be mounted on the magazine 800 are of a brand with a relatively small height, by using the bottom raising member 809, the pack products 5 can be removed from the magazine 800 with substantially the same workability as that in a case in which pack products 5 of a brand with a relatively large height are removed.

In this manner, the plurality of magazines 800 provided in the pack fixture 80 can be referred to as plurality of product stocker units that are included in the product storage unit and that are capable of storing tobacco products in a classified manner according to brand, or plurality of single-item stocker units that are capable of storing pack products of tobacco products in a classified manner according to brand.

The flap 802 is formed of the plate-shaped front wall portion 803 and plate-shaped side wall portions 811 that are provided as a right and left pair, and is rotatably supported by shaft parts 812 that are provided as a right and left pair at the front end portion of the mounting part main body 805. The flap 802 is guided by a pair of guide pins 813 that are rotatably supported by the pair of shaft parts 812 and that are a right and left pair provided for the mounting part main body 805 to be capable of being shaken in a forward tilt direction.

During normal state, not forward tilt state, a plate surface of the front wall portion 803 stands substantially vertical, so that the flap 802 shields the front surface of pack products 5 mounted on the mounting part 804. The flap 802 is urged in the standing direction by the wire-rod reel 814 and thus is maintained in the standing state during normal state. On the other hand, by the flap 802 being set to the forward tilt state by an external force, the pack products 5 can be removed.

In the following description, setting the plate surface of the front wall portion 803 of the flap 802 to the standing state may be referred to as closing a magazine 800, and setting the flap 802 to the forward tilt state may be referred to as opening a magazine 800.

In addition, at the rear end portion within the pack fixture 80, a distance measuring sensor 820 is provided for each magazine 800 in order to detect the number of pack products 5 stored in the magazine 800 and the presence state of the magazine 800 (whether the magazine 800 is removed) in the pack fixture 80 (see Fig. 13). Thus, the distance measuring sensor 820 can be referred to as sensor unit that senses tobacco products stored in each of the plurality of product stocker units included in the product storage unit or that senses each product stocker unit provided in the product storage unit.

In the example in Fig. 13, the distance measuring sensor 820 is formed of a distance-measuring light-emitting part 821 that emits light forward and a light receiving part (not illustrated) that receives reflected light of the light emitted from the distance-measuring light-emitting part 821. The distance measuring sensor 820 detects the distance between the distance measuring sensor 820 and the pressure slider 807, the distance between the distance measuring sensor 820 and the wire-rod reel 814, or the distance between the distance measuring sensor 820 and a pack product 5 at the tail end.

For example, the distance measuring sensor 820 may start to measure the distance in response to the flap 802 returning to the standing state from the forward tilt state. In this case, a structure in which the distance-measuring light-emitting part 821 emits light upon the flap 802 returning to the standing state from the forward tilt state may be provided. Thus, the distance can be measured after a pack product 5 is removed and stocked, and each time, the number of stored pack products 5 can be detected.

A detection signal from each distance measuring sensor 820 is transmitted to the first control unit 30.

Note that the measurement method of the distance measuring sensor 820, the installed position thereof, and the like are not limited as long as the number of pack products 5 stored in the magazine 800 and the presence state of the magazine 800 in the pack fixture 80 can be detected. In addition, although the distance measuring sensor 820 is used to detect the number of pack products 5 stored in each magazine 800 and the presence state of the magazine 800 in the pack fixture 80 in the second embodiment, the detection method thereof is not limited to only the distance measurement and may be weight detection, pressure detection, and the like.

Furthermore, on the front end surface of each of the shelf boards 850, a pack-position reporting LED 851 for reporting the position of each magazine 800 is provided.

The pack-position reporting LED 851 reports the mounted position of each magazine 800 on the shelf board 850. That is, the pack-position reporting LED 851 is provided at a part located below each magazine 800 on the front end surface of the shelf board 850. That is, in the example in Fig. 12 and Fig. 13, on the front end surface of each of the shelf boards 850, pack-position reporting LEDs 851 are provided, and the number thereof equals to the number (eight) of the mounted magazines 800.

Thus, in a shelf board 850 that mounts a magazine 800 storing a pack product 5 of a brand to be removed, a pack-position reporting LED 851 provided below the magazine 800 is turned on.

The pack-position reporting LED 851 in the second embodiment can be turned on in a plurality of colors. Specifically, the light color when a pack product 5 is removed and the light color when a pack product 5 is stocked are switched. Switching the light color of the pack-position reporting LED 851 may be implemented by forming the pack-position reporting LED 851 by a plurality of LED chips and switching an LED chip to emit light or may be implemented by another method. In addition, other than the light color, the lighting manner may be switched between removal and stock, such as blinking and lighting.

Although details will be described later, turning on and off of the pack-position reporting LED 851 and the light color thereof are controlled by the first control unit 30.

Furthermore, the pack fixture 80 includes a display panel 860 elongated in the horizontal direction at the front end portion in the center in the vertical direction. In the example in Fig. 2 and Fig. 3, the display panel 860 is provided below the shelf board 850 on the third level from the top.

On the display panel 860, an order quantity display part 861 and a terminal number display part 862 are provided. The order quantity display part 861 displays an order quantity designated on the order terminal 20, and the terminal number display part 862 displays the number of the order terminal 20. If only a single order terminal 20 is provided, the terminal number display part 862 displays "1". Note that, if a plurality of order terminals 20 are provided, the terminal number display part 862 displays the number of an order terminal 20 that has issued an order instruction.

For example, the order quantity display part 861 and the terminal number display part 862 are formed of seven-segment displays. In the example in Fig. 12, the order quantity display part 861 is formed of two seven-segment displays, and the terminal number display part 862 is formed of one seven-segment display. Note that the method for implementing the order quantity display part 861 and the terminal number display part 862 is not limited to such an example, and may also be implemented by a liquid crystal monitor or the like.

Although details will be described later, display of the order quantity display part 861 and the terminal number display part 862 is controlled by the first control unit 30.

From the above, for example, if two pack products 5 of a brand A are ordered on an order terminal 20 with a terminal number 1, the order quantity display part 861 displays "2", and the terminal number display part 862 displays "1", and also, on the shelf board 850 on which a magazine 800 storing pack products 5 of the brand A is mounted, the pack-position reporting LED 851 below the magazine 800 is turned on.

A salesperson can easily grasp that, from the magazine 800 above the pack-position reporting LED 851 that is turned on, the number of (2) pack products 5 displayed on the order quantity display part 861 are to be removed.

The carton fixture 60 in the subject system 2 is substantially the same as that in the first embodiment. Thus, a plurality of storage regions provided in the carton fixture 60 can be referred to as plurality of product stocker units that are capable of storing tobacco products in a classified manner according to brand or plurality of carton stocker units that are capable of storing carton products of tobacco products in a classified manner.

### [Processing Configuration]

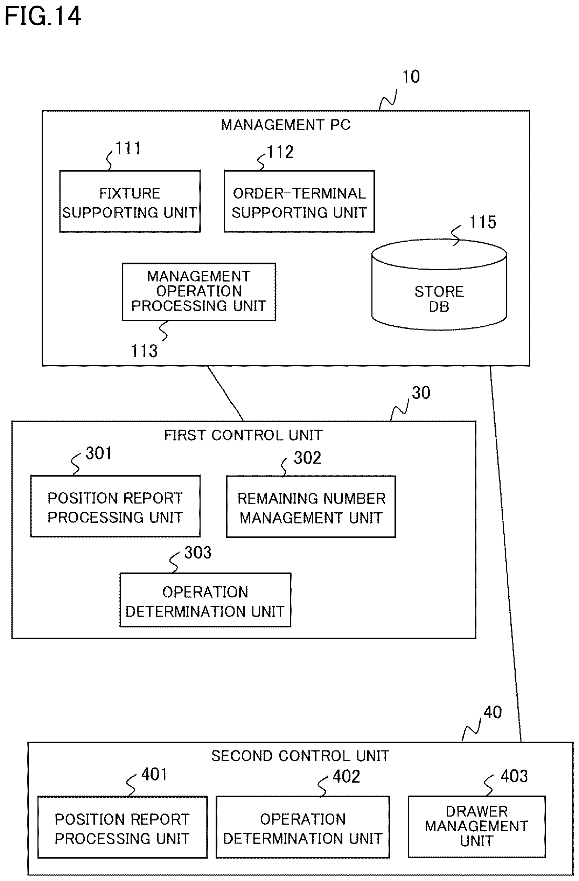

Next, a processing configuration of the management PC 10, the first control unit 30, and the second control unit 40 will be described with reference to Fig. 14. Fig. 14 is a block diagram illustrating a processing configuration example of the management PC 10, the first control unit 30, and the second control unit 40 in the second embodiment.

The first control unit 30 includes a position report processing unit 301, a remaining number management unit 302, an operation determination unit 303, and the like. These are software elements and are embodied by a control program stored in the memory, such as a RAM or a ROM, being executed by the CPU.

Upon reception of a removal instruction or a stock instruction from the management PC 10, based on the instruction, the position report processing unit 301 turns on a corresponding pack-position reporting LED 851 provided in the pack fixture 80. Specifically, the removal instruction and the stock instruction include an identifier of a magazine 800 (magazine ID to be described later) from or in which a pack product 5 is to be removed or stocked, and the position report processing unit 301 turns on a pack-position reporting LED 851 identified by the identifier in a light color corresponding to removal or stock. The position report processing unit 301 holds association information between the identifier of each magazine 800 and a corresponding pack-position reporting LED 851, and, based on the association information, can identify the pack-position reporting LED 851 corresponding to the identifier of the magazine 800 included in the removal instruction or the stock instruction.

If removal or stock is to be performed on a plurality of magazines 800 as targets, the removal instruction and the stock instruction may include the identifiers of the plurality of magazines 800. In this case, the position report processing unit 301 may collectively turn on a plurality of pack-position reporting LEDs 851 corresponding to the plurality of identifiers.

Furthermore, upon reception of the removal instruction, the position report processing unit 301 causes the terminal number display part 862 of the display panel 860 to display a terminal number included in the removal instruction and causes the order quantity display part 861 of the display panel 860 to display the number of pack products 5 to be removed included in the instruction. The displays on the order quantity display part 861 and the terminal number display part 862 that are displayed in this manner are, for example, deleted by opening the magazine 800 that is the target of the removal instruction (tilting forward the flap 802) or by opening and closing the magazine 800 (tilting forward and returning the flap 802). Note that these displays may be deleted if the operation determination unit 303, which will be described later, determines that a removal operation is normal or may be deleted when a certain time has elapsed after display.

Upon reception of a detection signal from the distance measuring sensor 820 in the pack fixture 80, based on the detection signal, the remaining number management unit 302 calculates the remaining number of pack products 5 to be stored in a corresponding magazine 800. Thus, the remaining number management unit 302 can be referred to as a detection means for detecting, based on sensing information from the sensor unit, a storage state of tobacco products in each of the plurality of product stocker units.

For example, the remaining number management unit 302 holds in advance a calculation formula for calculating the remaining number of pack products 5 from a distance indicated by the detection signal, and can calculate the remaining number by applying the distance indicated by the received detection signal to the calculation formula. Note that, the method of calculating the remaining number of pack products 5 to be stored in the magazine 800 is not limited to such an example. In a case in which the detection signal transmitted from the pack fixture 80 indicates weight or pressure, the remaining number may be calculated from it.

The remaining number management unit 302 transmits, to the management PC 10, the calculated remaining number together with the identifier of the corresponding magazine 800.

The operation determination unit 303 determines whether a removal operation of a pack product 5 from a magazine 800 or a stock operation of a pack product 5 in a magazine 800 by an operator is normal or abnormal.

For example, if a removal instruction or a stock instruction is received, depending on which distance measuring sensor 820 from which a detection signal is received, the operation determination unit 303 can determine whether a pack product 5 is removed or stocked from or in a target magazine 800. Specifically, if a removal instruction or a stock instruction is received and a detection signal is received from a distance measuring sensor 820 corresponding to a target magazine 800, the operation determination unit 303 can determine that a removal operation or a stock operation is normal. On the other hand, if a detection signal is received from a distance measuring sensor 820 corresponding to a magazine 800 that is not a target, the operation determination unit 303 can determine that a removal operation or a stock operation is abnormal.

In addition, by using the remaining number calculated by the remaining number management unit 302, by determining whether the remaining number decreases after reception of the removal instruction, the operation determination unit 303 may determine that a removal operation is normal. Similarly, the operation determination unit 303 may determine whether the remaining number increases after reception of the stock instruction, the operation determination unit 303 may determine that a stock operation is normal

In addition, by detecting opening of the target magazine 800 (tilting forward the flap 802) and opening and closing of the magazine 800 (tilting forward and returning the flap 802), the operation determination unit 303 may determine that a removal operation or a stock operation is normal.

Furthermore, the operation determination unit 303 may not necessarily determine whether a removal operation or a stock operation is normal or abnormal.

If the operation determination unit 303 determines that a removal operation or a stock operation is normal, the management PC 10 may be notified of the remaining number newly calculated by the remaining number management unit 302 together with removal completion or stock completion. On the other hand, if the operation determination unit 303 determines that a removal operation or a stock operation is abnormal, a pack-position reporting LED 551 corresponding to a magazine 800 from which the pack product is supposed to be removed or in which the pack product is supposed to be stocked may be blinked, or an error such as buzzer may be output.

Furthermore, based on a detection signal from the distance measuring sensor 820 in the pack fixture 80, the operation determination unit 303 detects a presence state of each magazine 800 in the pack fixture 80. For example, the operation determination unit 303 can detect whether each magazine 800 is removed from the pack fixture 80. Thus, the operation determination unit 303 can be referred to as a detection means for detecting, based on sensing information from the sensor unit, a presence state of each product stocker unit in the product storage unit.

Upon detection of a magazine 800 removed from the pack fixture 80, the operation determination unit 303 transmits, to the management PC 10, information indicating that the magazine is removed together with the identifier of the magazine 800.

The second control unit 40 includes a position report processing unit 401, an operation determination unit 402, a drawer management unit 403, and the like. These are software elements and are embodied by a control program stored in the memory, such as a RAM or a ROM, being executed by the CPU.

Upon reception of a removal instruction or a stock instruction from the management PC 10, based on the instruction, the position report processing unit 401 turns on corresponding carton-position reporting LEDs 62 provided in the carton fixture 60. Specifically, the removal instruction and the stock instruction include position information of a storage region in a drawer 61 from or in which a carton product is to be removed or stocked, and the position report processing unit 401 turns on carton-position reporting LEDs 62 corresponding to the position information. The position report processing unit 401 holds association information between the position of each storage region and corresponding carton-position reporting LEDs 62, and, based on the association information, can identify the carton-position reporting LEDs 62 corresponding to the position information of the storage region included in the removal instruction or the stock instruction.

The removal instruction may include pieces of position information of the plurality of storage regions. In this case, the position report processing unit 401 may collectively turn on a plurality of carton-position reporting LEDs 62 corresponding to the plurality of pieces of position information.

The operation determination unit 402 determines whether a removal operation of a carton product from a storage region in a drawer 61 or a stock operation of a carton product in a storage region by an operator is normal or abnormal.

If a removal instruction is received, subsequently, based on sensing information from the detection sensor, upon confirmation that a carton product is removed from a target storage region, the operation determination unit 402 determines that a removal operation is normal. On the other hand, upon confirmation that a carton product is removed from a storage region other than a target storage region, the operation determination unit 402 determines that a removal operation is abnormal.

In addition, if a stock instruction is received, subsequently, based on sensing information from the detection sensor, upon confirmation that a carton product is stored in a target storage region, the operation determination unit 402 determines that a stock operation is normal Upon confirmation that a carton product is stored in a storage region other than a target storage region, the operation determination unit 402 determines that a stock operation is abnormal.

Note that the operation determination unit 402 may not necessarily determine whether a removal operation or a stock operation is normal or abnormal In this case, based on sensing information from the detection sensor, if it is confirmed that a carton product is stored or removed, the operation determination unit 402 may notify the management PC 10 that a carton product is stocked or removed together with information (position information) by which the target storage region can be identified.

If the operation determination unit 402 determines that a removal operation or a stock operation is normal, the management PC 10 may be notified of removal completion or stock completion. On the other hand, if the operation determination unit 402 determines that a removal operation or a stock operation is abnormal, carton-position reporting LEDs 62 corresponding to a storage region that is supposed to be removed or to be stocked may be blinked, or an error such as buzzer may be output.

The drawer management unit 403 controls the lock mechanisms of the drawers 61. Specifically, based on a removal instruction or a stock instruction transmitted from the management PC 10, after corresponding carton-position reporting LEDs 62 have been turned on, the drawer management unit 403 sets a lock mechanism of a corresponding drawer 61 to unlocked state. Subsequently, upon detection of complete storage in the drawer 61, the drawer management unit 403 sets the lock mechanism of the drawer 61 to locked state.

### [Management PC]

The management PC 10 includes a fixture supporting unit 111, an order-terminal supporting unit 112, a management operation processing unit 113, a store database (DB) 115, and the like. These are software elements and are embodied by a control program stored in the memory 12, such as a RAM or a ROM, being executed by the CPU 11.

The store DB 115 stores brand master information, by-store brand information, brand notification information, fixture setting information, outside-fixture information, ordering face information, fixture event log, and the like.

The brand master information is substantially the same as that in the first embodiment and is stored in the brand master table illustrated in Fig. 6(a).

The by-store brand information is substantially the same as that in the first embodiment except in the following respects. In addition to the details in the first embodiment, the by-store brand information includes a handling state according to brand. The handling state indicates a state in which a product is on sale (referred to as normal state), a state in which a product is to be no longer handled after sellout (referred to as sellout state), or a state in which a product is no longer handled (referred to as stop state). The by-store brand information including the handling state is stored in the by-store brand information table illustrated in Fig. 6(b).

The brand notification information is notification information from an external server device about a tobacco product of a brand indicated by the by-store brand information and includes recall brand information, discontinued brand information, and the like. The management PC 10 acquires the brand notification information from the external server device and stores the brand notification information in the store DB 115.

The recall brand information is information indicating a brand for which some or all of tobacco products must be recalled (referred to as recall target brand) and includes, for example, a brand ID of the recall target brand.

The discontinued brand information is information indicating a brand that is decided to be discontinued (referred to as discontinued brand).

The fixture setting information includes pack-fixture management information, carton-fixture management information, and the like.

The pack-fixture management information stores pieces of magazine information in which a brand ID, a magazine ID of a magazine 800, and a remaining number are associated. The number of the pieces of magazine information equals to the total number of magazines 800 provided in the pack fixture 80.

The magazine ID is information for identifying a pack-position reporting LED 851 that reports the position of a target magazine 800 as described above. As described above, the correspondence relationship between the magazine ID and the corresponding pack-position reporting LED 851 is stored in the first control unit 30.

The carton-fixture management information is information in which, for all storage regions formed in the carton fixture 60, the position information of a storage region, a brand ID indicating the brand of a carton product to be stored in the storage region, and a storage state (present/absent) of the carton product are associated with each other. The position information of each storage region included in the carton-fixture management information is formed of, for example, a number of a drawer 61, a column number in the horizontal direction in the drawer 61, and a partition number in the front-to-back direction in the drawer 61. Note that the position information of each storage region may be anything by which the position report processing unit 401 of the second control unit 40 can identify carton-position reporting LEDs 62 corresponding to the storage region, and may be a storage region identifier by which the storage region can be identified.

Note that the fixture setting information may further include the above-described renewal-or-discontinuation reservation information (replacement reservation information).

The outside-fixture information includes an outside-fixture stock number held in a store but not stored in the fixtures that are the pack fixture 80 and the carton fixture 60, delivery slip information, and the like.

The delivery slip information includes, for each delivery slip, a slip number, a delivery processing state (processed or unprocessed), a scheduled delivery date, delivered product information, and the like.

Before actual delivery of tobacco products, the management PC 10 acquires the delivery slip information from an external server device and stores the delivery slip information in the store DB 115 as the outside-fixture information. At this time, the delivery processing state in the delivery slip information to be newly stored is unprocessed state.

The delivered product information is information by which the brand of tobacco products to be delivered can be identified or information indicating the number of tobacco products to be delivered.

The ordering face information is substantially the same as that in the first embodiment. The ordering face information is used in generation processing of a brand selection screen by the order-terminal supporting unit 112.

The fixture event log is also substantially the same as that in the first embodiment and includes, for each event that has occurred in the pack fixture 80 or the carton fixture 60, information such as the event occurrence date and time (simply referred to as date and time), a fixture ID for identifying a fixture in which the event has occurred, an event ID for identifying event details, a brand ID, or the number of tobacco products. The fixture event log is updated by the fixture supporting unit 111. Various kinds of processing regarding the fixture event log may be substantially the same as those in the first embodiment, and thus are omitted from the description in the second embodiment.

By communicating with the first control unit 30 and the second control unit 40, the fixture supporting unit 111 supports and manages operations of the pack fixture 80 and the carton fixture 60. Thus, the fixture supporting unit 111 can be referred to as a stocker management means for managing the plurality of product stocker units (including the plurality of carton stocker units and the plurality of single-item stocker units).

Upon reception of information including a magazine ID and a remaining number from the first control unit 30 (the remaining number management unit 302 or the operation determination unit 303), the fixture supporting unit 111 updates a remaining number associated with the magazine ID in the pack-fixture management information to the received remaining number. In addition, upon being notified of stock or removal together with the position information of a target storage region from the second control unit 40 (the operation determination unit 402), the fixture supporting unit 111 updates a storage state of a carton product associated with the position information in the carton-fixture management information in accordance with the notification. Note that the remaining number of each magazine 800 and the presence or absence of a carton product in each storage region in the carton fixture 60 may also be updated upon notification of removal completion or stock completion from the first control unit 30 (the operation determination unit 303) or the second control unit 40 (the operation determination unit 402).

Upon detection of a magazine 800 in which the remaining number is less than a predetermined number by referring to the remaining number of each magazine 800 managed in the pack-fixture management information (the store DB 115), the fixture supporting unit 111 generates restock alert information that encourages restock of a tobacco product of the brand that is assigned to the magazine 800. The generated restock alert information is displayed on the fixture management terminal 56 as a restock alert list described later.

The predetermined number to be compared with the remaining number herein is preferably less than or equal to a number obtained by subtracting the number (e.g., 10) of pack products included in a carton product from a maximum number of pack products that can be stored in the magazine 800. In this manner, all pack products removed by unwrapping a carton product can be restocked in the magazine 800, without producing extra pack products.

If ordered brand information is acquired from the order terminal 20, based on the ordered brand information, the fixture supporting unit 111 transmits an instruction regarding an ordered brand to the first control unit 30 or the second control unit 40. Specifically, based on an order unit ID included in the ordered brand information, the fixture supporting unit 111 determines that an order unit is either one or both of a pack product and a carton product. If the order unit includes a pack product, the fixture supporting unit 111 transmits a removal instruction to the first control unit 30. At this time, based on a brand ID of the ordered brand included in the ordered brand information, the fixture supporting unit 111 extracts a magazine ID of a magazine 800 corresponding to the brand ID from the pack-fixture management information included in the fixture setting information in the above-described store DB 115, and adds, to the removal instruction, the magazine ID and the number of tobacco products included in the ordered brand information.

At this time, the fixture supporting unit 111 may determine whether the number of tobacco products included in the ordered brand information can be sold and may return the determination result to the order terminal 20. Specifically, the fixture supporting unit 111 determines whether the number of tobacco products included in the ordered brand information is less than or equal to the remaining number associated with the magazine ID of the target magazine 800 in the pack-fixture management information, and, if the number of tobacco products is less than or equal to the remaining number, returns the determination result indicating that the number of tobacco products can be sold to the order terminal 20. If the number of tobacco products exceeds the remaining number, the fixture supporting unit 111 further determines whether a sum total of an outside-fixture remaining number included in the outside-fixture information in the store DB 115 and the remaining number in the pack fixture 80 is greater than or equal to the number of tobacco products included in the ordered brand information. Thus, if the sum total is greater than or equal to the number of tobacco products included in the ordered brand information, a reply indicating that the number of tobacco products can be sold by including an outside-fixture stock may be sent; if not, a reply indicating stock shortage may be sent.

Thus, the order terminal 20 receiving such a reply can display "stock is short, but ask salesperson" if the number of tobacco products can be sold by including the outside-fixture stock, or can display "stock is short" if the number of tobacco products cannot be sold even by including the outside-fixture stock.

On the other hand, if the order unit includes a carton product, the fixture supporting unit 111 transmits a removal instruction to the second control unit 40. At this time, based on a brand ID of the ordered brand included in the ordered brand information, the fixture supporting unit 111 extracts position information of a storage region corresponding to the brand ID from the carton-fixture management information included in the fixture setting information in the above-described store DB 115, and adds, to the removal instruction, the position information and the number of tobacco products included in the ordered brand information.

Also in this case, as described above, the fixture supporting unit 111 may determine whether the number of tobacco products included in the ordered brand information can be sold and may return the determination result to the order terminal 20.

In addition, the fixture supporting unit 111 adds, to the above removal instruction, a terminal number of the order terminal 20 from which the ordered brand information is transmitted. Note that, in this embodiment, since the order terminal 20 is only a single terminal, a fixed terminal number "1" may be set in the removal instruction, or the terminal number is not necessarily added to the removal instruction.

If being notified of removal completion from the first control unit 30 (the operation determination unit 303), based on a remaining number included in the notification, the fixture supporting unit 111 updates the remaining number in a target magazine 800 in the pack-fixture management information in the fixture setting information in the store DB 115. The target magazine 800 can be identified by the magazine ID set in the removal instruction.

Note that, if the first control unit 30 does not issue a notification of removal completion, the fixture supporting unit 111 may update the remaining number in the pack-fixture management information by using information on the remaining number transmitted from the remaining number management unit 302 of the first control unit 30.

Similarly, upon being notified of removal completion from the second control unit 40 (the operation determination unit 402), the fixture supporting unit 111 clears a brand ID in a record of a target storage region in the carton-fixture management information in the fixture setting information in the store DB 115 and also updates the storage state to "absent". The target storage region can be identified by the record in which a brand ID of the ordered brand set in the removal instruction is set.

Note that, if the second control unit 40 (the operation determination unit 402) does not issue a notification of removal completion, the fixture supporting unit 111 may update the storage state of the target storage region in the carton-fixture management information by using information about removal transmitted from the second control unit 40.

If a stock request operation is performed on the fixture management terminal 56, the fixture supporting unit 111 determines whether a stock brand that is the target in the stock request operation is assigned to a magazine 800 in the pack fixture 80 or a storage region in the carton fixture 60, and then transmits an instruction regarding the stock brand to the first control unit 30 or the second control unit 40. The stock brand means the brand of a tobacco product to be stocked.

In a case of restocking a tobacco product, since the tobacco product of the stock brand has already been stored in the pack fixture 80 or the carton fixture 60, brand information of the stock brand is stored in the by-store brand information table in the store DB 115. On the other hand, in a case of newly stocking a tobacco product, since the tobacco product of the stock brand is yet to be stored in both the pack fixture 80 and the carton fixture 60, brand information of the stock brand is not stored in the by-store brand information table.

Thus, based on the brand ID, the pack code, or the carton code regarding the stock brand, by referring to the by-store brand information table in the store DB 115, the fixture supporting unit 111 can determine whether the stock brand is assigned to a magazine 800 in the pack fixture 80 or a storage region in the carton fixture 60.

Furthermore, in this embodiment, depending on whether a record in which the brand ID of the stock brand is set exists in the pack-fixture management information and the carton-fixture management information in the fixture setting information stored in the store DB 115, it can be determined whether the stock brand is assigned to a magazine 800 in the pack fixture 80 or a storage region in the carton fixture 60.

In the following description, any of these determinations may be referred to as determination as to whether a brand is assigned to a magazine 800 or a storage region.

As the stock request operation in a case of restocking a tobacco product, in addition to the first, second, and third stock request operations according to the first embodiment, the second embodiment herein newly illustrates a stock request operation in which an operator (a salesperson) selects a restock target brand from the restock alert list to be described later. The restock alert list is displayed on the fixture management terminal 56, for example. Hereinafter, this will be referred to as fourth stock request operation.

Note that, although the description is repeated, the first stock request operation is a stock request operation in which an operator (a salesperson) selects a restock target brand from a brand list of tobacco products stored in the pack fixture 80 or the carton fixture 60. The second stock request operation is a stock request operation in which an operator causes the barcode scanner connected to the fixture management terminal 56 to read a JAN code of a stock target pack product to designate a stock target brand. The third stock request operation is a stock request operation in which an operator causes the barcode scanner connected to the fixture management terminal 56 to read a JAN code of a stock target carton product to designate a stock target brand.

Note that the first stock request operation is not necessarily provided in the second embodiment.

For example, by acquiring an operation ID by which such first, second, third, and fourth stock request operations can be identified from the fixture management terminal 56, based on the operation ID, the fixture supporting unit 111 performs the following stock processing.

If an operation ID indicating the second stock request operation and the JAN code of a pack product are acquired from the fixture management terminal 56, the fixture supporting unit 111 identifies brand information storing the JAN code as a pack code from the by-store brand information table in the store DB 115. Furthermore, based on a brand ID of the identified brand information, from the pack-fixture management information in the fixture setting information in the store DB 115, the fixture supporting unit 111 extracts a magazine ID of a magazine 800 in the pack fixture 80 associated with the brand ID and transmits a stock instruction including the extracted magazine ID to the first control unit 30. Thus, in the pack fixture 80, a pack-position reporting LED 551 corresponding to the magazine ID is turned on in a light color corresponding to stock.

If an operation ID indicating the third stock request operation and the JAN code of a carton product are acquired from the fixture management terminal 56, the fixture supporting unit 111 identifies brand information storing the JAN code as a carton code from the by-store brand information table in the store DB 115. The fixture supporting unit 111 transmits a restock instruction including a brand ID in the brand information to the second control unit 40. Thus, in the carton fixture 60, carton-position reporting LEDs 62 reporting the position of a storage region to which the brand ID of the restock brand is assigned is turned on, the lock mechanism of the drawer 61 having the storage region is set to unlocked state, and a carton product can be restocked in the storage region.

If an operation ID indicating the first stock request operation and a brand ID of a stock brand are acquired from the fixture management terminal 56, the fixture supporting unit 111 first transmits a removal instruction including the brand ID of the stock brand to the second control unit 40. Thus, in the carton fixture 60, carton-position reporting LEDs 62 reporting the position of the storage region storing the carton product of the stock brand are turned on, the lock mechanism of the drawer 61 having the storage region is set to unlocked state.

Thus, an operator (a salesperson) can remove the carton product of the stock brand from the storage region in the drawer 61. Upon the detection sensor in the drawer 61 detecting removal of the carton product or closing of the drawer 61, the fixture supporting unit 111 can instruct the fixture management terminal 56 to start the barcode scanner.

An operator (a salesperson) unwraps the removed carton product to remove a plurality of pack products, and restocks the pack products in the pack fixture 80. At this time, the operator causes the barcode scanner of the fixture management terminal 56 to read the JAN code of a pack product.

The fixture supporting unit 111 acquires the JAN code of the pack product of the stock brand from the fixture management terminal 56, identifies brand information in which the JAN code is set as a pack code from the by-store brand information table in the store DB 115, and extracts a brand ID corresponding to the JAN code from the brand information. Thus, the fixture supporting unit 111 confirms that the brand ID that is acquired in advance together with the operation ID of the first stock request operation corresponds with the brand ID corresponding to the JAN code of the pack product, extracts a magazine ID of a magazine 800 to which the brand ID is assigned from the pack-fixture management information in the fixture setting information in the store DB 115, and transmits a stock instruction including the magazine ID to the first control unit 30. Thus, in the pack fixture 80, a pack-position reporting LED 551 corresponding to the magazine ID is turned on in a light color corresponding to stock.

The processing of the fixture supporting unit 111 in a case in which the fourth stock request operation is performed is substantially the same as that in a case in which the first stock request operation is performed. Since the restock alert list is a list of brands that need to be restocked among the brands stored in the pack fixture 80, an operator (a salesperson) selects a brand to be restocked from the restock alert list. Note that details of the restock alert list will be described later.

As described in the first embodiment, the second and third stock request operations are also performed when a tobacco product is newly stocked.

In this case, brand information that stores, as a pack code, a JAN code of a pack product transmitted from the fixture management terminal 56 is not stored in the by-store brand information table in the store DB 115. In addition, brand information that stores, as a carton code, a JAN code of a carton product transmitted from the fixture management terminal 56 is not stored in the by-store brand information table either. In addition, a record in which a brand ID corresponding to the JAN code of the pack product or the carton product is set does not exist in the pack-fixture management information and the carton-fixture management information in the fixture setting information in the store DB 115.

Thus, in response to the second stock request operation, by referring to the fixture setting information in the store DB 115, the fixture supporting unit 111 searches for a magazine 800 to which a brand is not assigned. Similarly, in response to the third stock request operation, the fixture supporting unit 111 searches for a storage region to which a brand is not assigned.

The magazine 800 to which a brand is not assigned can be identified by searching for a magazine ID of a magazine 800 for which a brand ID is not set in the pack-fixture management information. The storage region to which a brand is not assigned can be identified by searching for position information of a storage region for which a brand ID is not set in the carton-fixture management information.

In addition, a brand ID of a new stock brand is acquired from the brand master table in the store DB 115. The method of acquiring the brand ID of the new stock brand from the brand master table is substantially the same as that in the first embodiment.

If it is determined that a pack product is newly stocked in accordance with the second stock request operation, and if the magazine 800 to which a brand is not assigned could be identified, the fixture supporting unit 111 transmits a stock instruction including a magazine ID of the unassigned magazine 800 to the first control unit 30, and subsequently, substantially the same process as that at the above-described time of restocking a tobacco product is performed. At this time, in the pack-fixture management information (the store DB 115), the fixture supporting unit 111 associates the brand ID of the new stock brand to the magazine ID of the unassigned magazine 800, and further associates the number of stocked tobacco products of the new stock brand as the remaining number.

However, if it is determined that a pack product is newly stocked, and if the magazine 800 to which a brand is not assigned could not be identified, the fixture supporting unit 111 displays an error "there is no available magazine", for example.

If it is determined that a carton product is newly stocked in accordance with the third stock request operation, and if the storage region to which a brand is not assigned could be identified, the fixture supporting unit 111 transmits a stock instruction including position information of the unassigned storage region to the second control unit 40, and subsequently, substantially the same process as that at the above-described time of restocking a tobacco product is performed.

At this time, in the carton-fixture management information (the store DB 115), the fixture supporting unit 111 first associates the brand ID of the new stock brand to the position information of the unassigned storage region. Herein, if a carton product is newly stocked, a pack product of the brand needs to be newly stocked, and thus, the fixture supporting unit 111 searches for an available magazine 800 for newly stocking the pack product, that is, a magazine ID of a magazine 800 for which a brand ID is not set in the pack-fixture management information. In addition, if the magazine 800 to which a brand is not assigned could be identified, the fixture supporting unit 111 associates the brand ID of the new stock brand to the magazine ID of the unassigned magazine 800 in the pack-fixture management information (the store DB 115) to reserve the available magazine 800. At this time, the brand of the pack product assigned to the reserved magazine 800 is no longer the new stock brand, and thus, the fixture supporting unit 111 generates restock alert information that encourages restock of the brand of the pack product that is assigned to the reserved available magazine 800.

In the above manner, the fixture supporting unit 111 can be referred to as a stocker management means for newly assigning the brand indicated by the stocked brand identifier (the brand ID of the new stock brand) to a carton stocker unit to which no brand is assigned among the plurality of carton stocker units, newly assigning the brand to a single-item stocker unit to which no brand is assigned among the plurality of single-item stocker units, and further outputting information that encourages stock of a pack product of the brand.

If, although the brand ID of the new stock brand can be associated with the position information of the unassigned storage region in the carton-fixture management information (the store DB 115), no available magazine 800 can be found, the fixture supporting unit 111 generates restock alert information including an error message "there is no available magazine".

In addition, if it is determined that a carton product is newly stocked, and if a storage region to which a brand is not assigned cannot be identified, the fixture supporting unit 111 displays an error "there is no available magazine", for example.

If, by an operator operation on a menu of a product management screen, which will be described later, on the fixture management terminal 56, a brand that is to be no longer handled immediately (hereinafter referred to as immediate stop brand) is designated, in order to make all tobacco products of the immediate stop brand be removed, the fixture supporting unit 111 transmits, to the first control unit 30, a removal instruction including magazine IDs of all magazines 800 to which the immediate stop brand is assigned, and transmits, to the second control unit 40, a removal instruction including position information of all storage regions in the carton fixture 60 to which the immediate stop brand is assigned. In the removal instruction transmitted to the first control unit 30 at this time, the number (e.g., 99) indicating collective removal may be set.

As a result, all pack-position reporting LEDs 851 corresponding to all the magazine IDs included in the removal instruction are collectively turned on in a light color corresponding to removal, and all carton-position reporting LEDs 62 corresponding to all the storage positions included in the removal instruction are collectively turned on in a light color corresponding to removal.

Thus, the fixture supporting unit 111 can be referred to as a stocker management means for causing, in order to make all tobacco products of the immediate stop brand be removed, the product storage unit to present all product stocker units to which the immediate stop brand is assigned.

Thus, tobacco products of the brand that is wished to be no longer handled immediately can be removed from the pack fixture 80 and the carton fixture 60 quickly, and also, efforts for removal can be reduced.

Upon detection of removal of all tobacco products of the immediate stop brand, the fixture supporting unit 111 changes the handling state of the immediate stop brand from the normal state to the stop state in the by-store brand information in the store DB 115.

In addition, if recall brand information is included in the brand notification information in the store DB 115, in order to make a salesperson check whether a tobacco product to be recalled is included in the recall target brand, the fixture supporting unit 111 transmits, to the first control unit 30, a removal instruction including magazine IDs of all magazines 800 to which the recall target brand is assigned, and transmits, to the second control unit 40, a removal instruction including position information of all storage regions in the carton fixture 60 to which the recall target brand is assigned. In the removal instruction transmitted to the first control unit 30 at this time, the number (e.g., 99) indicating collective removal may be set. As a result, in the pack fixture 80, pack-position reporting LEDs 551 corresponding to the magazines 800 to which the recall target brand is assigned are turned on in a light color corresponding to removal, and, in the carton fixture 60, carton-position reporting LEDs 62 corresponding to all the storage positions included in the removal instruction are turned on in a light color corresponding to removal.

Note that, even upon detection of absence of all the tobacco products of the recall target brand in a magazine 800 or a storage region in the carton fixture 60 to which the recall target brand is assigned, or even upon detection of removal of a magazine 800 to which the recall target brand is assigned from the pack fixture 80, the fixture supporting unit 111 does not cancel the assignment of the recall target brand to the magazine 800 or the storage region in the carton fixture 60. Despite the recall target brand, remaining tobacco products other than the tobacco products to be recalled can be sold, and thus, after the tobacco products to be recalled have been removed by removing the magazine 800 from the pack fixture 80, the remaining tobacco products are stored in the magazine 800 again to be sold.

The order-terminal supporting unit 112 supports processing in the order terminal 20, and particularly manages various screens displayed on the order terminal 20.

Similarly to the order-terminal management unit 103 in the first embodiment, if a tobacco product of a new stock brand is newly stocked, the order-terminal supporting unit 112 automatically updates the screen data of the brand selection screen and transmits the updated screen data to the order terminal 20 so that a tobacco product of the new stock brand can be selected on the brand selection screen on the order terminal 20. If the first control unit 30 (the operation determination unit 303) issues a notification of stock completion, after reception of the notification, the order-terminal supporting unit 112 may transmit the updated screen data of the brand selection screen to the order terminal 20. In this case, the method of updating the screen data of the brand selection screen, the screen data transmitted to the order terminal 20, the display method of the changed brand selection screen on the order terminal 20, and the like are substantially the same as those in the first embodiment, and thus the description will be omitted.

In the second embodiment, not only if a tobacco product of a new stock brand is newly stocked, but also if a tobacco product of a brand that is not currently sold or handled is delivered, the order-terminal supporting unit 112 generates or updates the screen data of the brand selection screen, and transmits the screen data to the order terminal 20.

Hereinafter, the brand of a tobacco product that is not currently sold or handled may also be referred as unhandled brand.

The management operation processing unit 113 described later issues a notification that a tobacco product of the unhandled brand is delivered.

In addition, if it is detected that recall brand information is included in the brand notification information in the store DB 115, the order-terminal supporting unit 112 transmits order disenabling information of the recall target brand indicated by the recall brand information to the order terminal 20.

The "order disenabling information" is information for disenabling ordering of a tobacco product of a target brand on the order terminal 20. The order disenabling information may be information including a brand ID of the target brand (herein, the recall target brand) or may be screen data formed so as to disenable ordering of the target brand, and specific details thereof are not limited.

On the order terminal 20 that has received the order disenabling information, ordering of the recall target brand is disenabled. For example, the brand information of a tobacco product of the recall target brand may refrain from being displayed on the brand selection screen, an operation for brand information may be made unacceptable while the brand information is displayed, or, the operation may be accepted and an error "sales stopped" may be displayed.

Thus, the order-terminal supporting unit 112 may be referred to as a recall information acquisition means for acquiring recall brand information indicating a recall target brand of tobacco product and may also be referred to as a transmission means for transmitting, to the order terminal 20, information for disenabling ordering of the recall target brand indicated by the acquired recall brand information.

This can prevent a tobacco product to be recalled from being sold.

After the order disenabling information of the recall target brand has been transmitted to the order terminal 20 as described above, upon detection of removal of at least one of tobacco products of the recall target brand from a magazine 800 or a storage region in the carton fixture 60 to which the recall target brand is assigned, or upon detection of removal of a magazine 800 to which the recall target brand is assigned from the pack fixture 80, the order-terminal supporting unit 112 transmits order enabling information of the recall target brand to the order terminal 20.

The "order enabling information" is information for enabling ordering of a tobacco product of a target brand on the order terminal 20. The order enabling information may be information including a brand ID of the target brand (herein, the recall target brand) or may be screen data formed so as to enable ordering of the target brand, and specific details thereof are not limited.

Note that, only upon detection of removal of all of tobacco products of the recall target brand from a magazine 800 or a storage region in the carton fixture 60 to which the recall target brand is assigned, the order-terminal supporting unit 112 may transmit the order enabling information of the recall target brand to the order terminal 20. In this manner, after all tobacco products of the recall target brand have been removed, ordering of the recall target brand is enabled. This can more reliably prevent a tobacco product to be recalled from being sold.

On the order terminal 20 that has received the order enabling information, ordering of the recall target brand is enabled as before.

The removal of at least one or all of tobacco products of the brand from the magazine 800 or the storage region in the carton fixture 60 to which the recall target brand is assigned can be detected based on the remaining number associated with a brand ID of the brand in the pack-fixture management information (the store DB 115) or the storage state of the storage region associated with a brand ID of the brand in the carton-fixture management information (the store DB 115). In addition, the removal of the magazine 800 to which the recall target brand is assigned from the pack fixture 80 can be detected based on information transmitted from the first control unit 30 (the operation determination unit 303).

Thus, the order-terminal supporting unit 112 can be referred to as a transmission means for transmitting, to the order terminal 20, information for enabling ordering of the recall target brand on the order terminal 20.

Thus, a salesperson checks, by removal a tobacco product of the recall target brand from the magazine 800 or the carton fixture 60 or by removal of the magazine 800 storing tobacco products of the recall target brand, whether a tobacco product to be recalled is not included therein, and then, ordering of an authentic tobacco product excluding the tobacco product to be recalled is acceptable.

In addition, the order-terminal supporting unit 112 transmits the order disenabling information of a handling stop brand to the order terminal 20.

The "handling stop brand" herein means a brand of a tobacco product that is to be no longer handled (sold) in a store and is used as a general term including at least the above-described immediate stop brand and a sellout brand.

For example, in a case in which the immediate stop brand or the sellout brand is designated on the menu on the product management screen to be described later, upon detection of absence of tobacco products of the immediate stop brand or the sellout brand in a magazine 800 and a storage region in the carton fixture 60 to which the brand is assigned, or upon detection of removal of a magazine 800 to which the brand is assigned from the pack fixture 80, the order-terminal supporting unit 112 transmits the order disenabling information of the immediate stop brand or the sellout brand to the order terminal 20.

The absence of tobacco products of the immediate stop brand or the sellout brand in a magazine 800 and a storage region in the carton fixture 60 to which the brand is assigned can be detected based on the remaining number associated with a brand ID of the brand in the pack-fixture management information (the store DB 115) or the storage state of the storage region associated with a brand ID of the brand in the carton-fixture management information (the store DB 115). In addition, the removal of a magazine 800 to which the immediate stop brand or the sellout brand is assigned from the pack fixture 80 can be detected based on information transmitted from the first control unit 30 (the operation determination unit 303).

Thus, the order-terminal supporting unit 112 can be referred to as a transmission means for transmitting, to the order terminal 20, information for disenabling ordering of the handling stop brand on the order terminal 20.

Thus, ordering on the order terminal 20 can be disenabled for a tobacco product of a brand that is designated to be no longer handled immediately or after sellout. This can eliminate a trouble of informing, after an order has been accepted, a customer that selling is not possible.

In addition, if a sellout brand for which the handling state indicates the sellout state exists in the by-store brand information in the store DB 115, based on the by-store brand information, the order-terminal supporting unit 112 can transmit, to the order terminal 20, information indicating that the sellout brand is to be no longer handled after sellout.

The sellout brand means a brand that is to be no longer handled after sellout, and thus is a type of handling stop brand to be described later. Thus, the order-terminal supporting unit 112 can be referred to as a transmission means for transmitting, if the stop designation information indicating that the handling stop brand is to be no longer handled after sellout is acquired, to the order terminal 20, information indicating that the handling stop brand indicated by the stop designation information is to be no longer handled after sellout.

Thus, before sellout, a customer can be informed of a brand of a tobacco product that is to be to be no longer handled after sellout in a store. This can prevent the customer who willingly purchases the brand from suddenly becoming unable to purchase it, thereby increasing the customer satisfaction.

The management operation processing unit 113 controls, for example, display on the fixture management terminal 56, such as the restock alert list, and manages information regarding the pack fixture 80 or the carton fixture 60 set by an operation on the fixture management terminal 56. The following description illustrates main processing performed by the management operation processing unit 113.

The management operation processing unit 113 performs processing regarding delivery of tobacco products. Specifically, by using the delivery slip information included in the outside-fixture information in the store DB 115, the management operation processing unit 113 causes the fixture management terminal 56 to display a delivery slip list. For example, the delivery slip list displays, for each delivery slip, a slip number, a delivery processing state, a scheduled delivery date, and the like. By referring to this delivery slip list, a user can grasp, for each delivery slip, whether delivery processing is in already finished state or in unprocessed state.

Furthermore, on the displayed delivery slip list, a delivery slip for which the delivery processing state is unprocessed state can be selected, and an operation of performing delivery processing of the selected delivery slip can be performed. Upon detection of a delivery processing operation on the displayed delivery slip list, the management operation processing unit 113 updates the delivery processing state of the operation-target delivery slip from unprocessed state to processed state.

In addition, in a case in which the barcode scanner provided for the fixture management terminal 56 reads a delivery slip of a delivery slip, the management operation processing unit 113 can identify a delivery slip corresponding to the read delivery slip information and can also update the delivery processing state of the delivery slip from unprocessed state to processed state.

To update the delivery processing state in the above manner, based on delivered product information included in the delivery slip information, the management operation processing unit 113 identifies brand IDs of delivered brands and the number of delivered tobacco products, and performs processing regarding the unhandled brand and processing of updating an outside-fixture stock.

In the processing regarding the unhandled brand, the management operation processing unit 113 determines whether an unhandled brand is present in the delivered brands, and, if an unhandled brand is present, the management operation processing unit 113 notifies the order-terminal supporting unit 112 that a tobacco product of the unhandled brand is delivered. Thus, through processing performed by the order-terminal supporting unit 112, the brand selection screen displayed on the order terminal 20 is updated such that a tobacco product of the unhandled brand can be ordered.

The unhandled brand can be identified by searching for a brand ID that is not associated with a magazine ID in the pack-fixture management information and is not associated with position information of a storage region in the carton-fixture management information, in the brand IDs of delivered brands. Since ordering of the unhandled brand is not enabled on the brand selection screen on the order terminal 20, identification of the unhandled brand corresponds to acquisition of a stocked brand identifier by which the brand (the unhandled brand) of a tobacco product to be stocked in the product storage unit storing tobacco products in a removable manner can be identified, and, based on the acquired stocked brand identifier, determination as to whether the order terminal 20 is capable of displaying brand information of a tobacco product of the brand indicated by the stocked brand identifier.

Note that, after an available magazine 800 for newly stocking a pack product of the above-described unhandled brand has been reserved, or after a pack product of the unhandled brand has been newly stocked in the magazine 800, the management operation processing unit 113 may perform processing so as to update the brand selection screen on the order terminal 20 to correspond to the unhandled brand. For example, the management operation processing unit 113 may search for a magazine ID of a magazine 800 for which a brand ID is not set in the pack-fixture management information, and, after associating a brand ID of the unhandled brand with the magazine ID of the magazine 800 to which a brand is not assigned, may notify the order-terminal supporting unit 112 that a tobacco product of the unhandled brand is delivered. In this case, the management operation processing unit 113 may also generate restock alert information that encourages restock of a tobacco product of the unhandled brand that is assigned to the reserved available magazine 800.

In addition, the management operation processing unit 113 may issue the notification after detecting, in the pack-fixture management information, that the remaining number associated with the brand ID of the unhandled brand becoming greater than 0.

In the processing of updating the outside-fixture stock, the management operation processing unit 113 updates the outside-fixture stock number included in the outside-fixture information in the store DB 115. For example, the management operation processing unit 113 adds the identified number of delivered tobacco products to the outside-fixture stock number included in the outside-fixture information. Thus, the outside-fixture stock number in the outside-fixture information reflects the number of delivered tobacco products.

In addition, the management operation processing unit 113 causes the fixture management terminal 56 to display the restock alert list that is a list of the restock alert information generated as described above.

The restock alert list, for example, includes brand information according to the brand that is the target in the restock alert information. As described above, the restock alert list includes the restock alert information for the delivered unhandled brand, the new stock brand, the brand of a pack product to be restocked in a magazine 800 in which the remaining number is less than the predetermined number, or the like.

On the displayed restock alert list, a stock request operation of selecting the restock target brand can be performed, and, when the management operation processing unit 113 detects the stock request operation, the fixture supporting unit 111 performs processing corresponding to the above-described fourth stock request operation.

In addition, the management operation processing unit 113 can change the display order of the restock alert information according to brand in the restock alert list to an order in accordance with sales. For example, on the displayed restock alert list, a predetermined period, such as the last two weeks, the last month, the last three months, or the last year, and a descending order or an ascending order of sales can be selected, and the management operation processing unit 113 can change the display order of the restock alert information according to brand in the descending order or the ascending order of sales during the selected period. Information regarding sales (number of sold tobacco products) or the like may be managed by the management PC 10 or may be acquired from an external server device.

In the above manner, a well-selling brand can be restocked preferentially.

Furthermore, the management operation processing unit 113 displays the product management screen for managing tobacco products stored in the pack fixture 80 and the carton fixture 60 and performs processing in accordance with an operation on a product management menu provided on the product management screen.

As the product management menu, for example, product storage state management, stocktaking, recall target product dispensing, in-fixture assortment change, assortment stop product list, order-terminal display order change, and the like are provided. Note that the product management menu may also include the same menu as the fixture management menu (e.g., restock request menu or handling stop brand selection menu) in the first embodiment.

The order terminal 20 may have substantially the same processing configuration as that in the first embodiment, but may also perform the following processing that is not mentioned in the first embodiment.

If an order target brand is selected on the brand selection screen, the order terminal 20 transmits the ordered brand information including a brand ID, an order unit ID, and the number of tobacco products of the order target brand to the management PC 10. At this time, the order terminal 20 may output display "stock is short, but ask salesperson" if a reply indicating that the brand can be sold by including the outside-fixture stock is received from the management PC 10, and may output display "stock is short" if a reply indicating that the brand cannot be sold even by including the outside-fixture stock is received.

In addition, the order terminal 20 disenables ordering of the recall target brand if the order disenabling information of the recall target brand is received from the management PC 10 and enables ordering of the recall target brand again if the order enabling information of the recall target brand is received from the management PC 10.

In addition, similarly, the order terminal 20 disenables ordering of the immediate stop brand or the sellout brand if the order disenabling information of the immediate stop brand or the sellout brand is received. Note that, in this case, since a tobacco product of the brand is to be no longer handled, the brand may be deleted from the brand selection screen.

If information indicating that a brand is to be no longer handled after sellout and information on the sellout brand are received from the management PC 10, the order terminal 20 may display the information indicating that a brand is to be no longer handled after sellout in a display region of brand information of the sellout brand on the brand selection screen.

### [Product Management Menu]

Now, the product management menu controlled by the management operation processing unit 113 will be described below in detail. In the following description, a series of operations of the management PC 10 executed in accordance with selection of each menu are also included. Note that "to display something" in the following description means to cause the fixture management terminal 56 to display something.

Upon selection of the stocktaking on the product management menu, a stocktaking screen is displayed. Upon detection of an operation on a stocktaking start button on the stocktaking screen, the management operation processing unit 113 transmits a stocktaking start instruction to the first control unit 30 and the second control unit 40.

Upon the first control unit 30 and the second control unit 40 receiving the stocktaking start instruction, the first control unit 30 and the second control unit 40 invalidate all sensors provided in the pack fixture 80 and the carton fixture 60. Invalidation of the sensors may be implemented by stopping electric power supplied to all the sensors, may be implemented by not accepting sensing information from the sensors, or may be implemented by accepting and neglecting the sensing information.

In addition, the second control unit 40 sets all lock mechanisms of the drawers 61 in the carton fixture 60 to unlocked state.

Thus, since the locks are unlocked in the carton fixture 60, a salesperson can pull out all the drawers 61, and in addition, since all the sensors are invalidated in the pack fixture 80 and the carton fixture 60, they can check a stock status of all pack products and carton products without influencing the subject system 2.

If a stocktaking process of all the tobacco products is completed, a stocktaking end button on the stocktaking screen is operated. Upon detection of the operation on the stocktaking end button, the management operation processing unit 113 transmits a stocktaking end instruction to the first control unit 30 and the second control unit 40. Thus, all the sensors provided in the pack fixture 80 and the carton fixture 60 are validated, and the lock mechanisms of the drawers 61 in the carton fixture 60 are also set to locked state.

Upon selection of the recall target product dispensing on the product management menu, a recall target product dispensing screen is displayed. Based on the recall brand information included in the brand notification information in the store DB 115, the management operation processing unit 113 displays a recall brand list on the recall target product dispensing screen. At this time, if the recall brand information is not included in the brand notification information, the management operation processing unit 113 can display an error "there are no recall target products currently".

On the recall brand list, a recall target brand can be selected. Upon selection of a recall target brand on the recall brand list and detection of an operation on a button indicating a dispensing process start, the management operation processing unit 113 notifies the fixture supporting unit 111 of a brand ID of the recall target brand together with information indicating a dispensing process start.

Thus, the fixture supporting unit 111 transmits, to the first control unit 30, a removal instruction including magazine IDs of all magazines 800 to which the recall target brand is assigned, and transmits, to the second control unit 40, a removal instruction including position information of all storage regions in the carton fixture 60 to which the recall target brand is assigned.

As a result, in the pack fixture 80, pack-position reporting LEDs 551 corresponding to the magazines 800 to which the recall target brand is assigned are turned on in a light color corresponding to removal, and, in the carton fixture 60, carton-position reporting LEDs 62 corresponding to all the storage positions included in the removal instruction are turned on in a light color corresponding to removal.

A salesperson removes all pack products from the magazines 800 indicated by the pack-position reporting LEDs 551 that are turned on or removes the magazines 800 from the pack fixture 80, and removes carton products from the storage regions indicated by the carton-position reporting LEDs 62 that are turned on, and then operates a button indicating a dispensing process end on the recall target product dispensing screen.

At this time, even upon detection of absence of all the tobacco products of the recall target brand in a magazine 800 or a storage region in the carton fixture 60 to which the recall target brand is assigned, or even upon detection of removal of a magazine 800 to which the recall target brand is assigned from the pack fixture 80, the assignment of the recall target brand to the magazine 800 or the storage region in the carton fixture 60 is not canceled.

From among the removed tobacco products of the recall target brand, a salesperson excludes a tobacco product to be recalled, and restocks again the remaining, authentic tobacco products in a normal restock procedure. The normal restock procedure herein is performed on the magazine 800 or the storage region in the carton fixture 60 to which the recall target brand has been assigned in accordance with any of the above-described first, second, third, and fourth stock request operations.

On the other hand, upon the detection that the recall brand information is included in the brand notification information, the order-terminal supporting unit 112 transmits the order disenabling information of the recall target brand indicated by the recall brand information to the order terminal 20, and ordering of the recall target brand is disenabled on the order terminal 20.

After detection of removal of at least one of tobacco products of the recall target brand from a magazine 800 or a storage region in the carton fixture 60 to which the recall target brand is assigned, or after detection of removal of a magazine 800 to which the recall target brand is assigned from the pack fixture 80, the order-terminal supporting unit 112 transmits the order enabling information of the recall target brand to the order terminal 20, and thus, ordering of the recall target brand is enabled on the order terminal 20.

Upon selection of the in-fixture assortment change on the product management menu, an in-fixture assortment change screen is displayed. On the in-fixture assortment change screen, a brand list that can be changed in an order of sales is displayed. The display order in the brand list can be changed by substantially the same method as that for the above-described restock alert list. Upon selection of a target brand on the displayed brand list, a sellout button and an immediate stop button are displayed.

Upon detection of an operation on the sellout button, the management operation processing unit 113 changes the handling state of the above selected target brand in the by-store brand information in the store DB 115 from the normal state to the sellout state. Thus, the management operation processing unit 113 can be referred to as an information acquisition means for acquiring stop designation information that designates a handling stop brand of tobacco product that is to be no longer handled. In addition, the stop designation information can be referred to as further including information that designates whether the handling stop brand is to be no longer handled immediately or is to be no longer handled after sellout.

In accordance with this, the order-terminal supporting unit 112 transmits, to the order terminal 20, information indicating that the sellout brand (the above selected target brand) is to be no longer handled after sellout. Thus, the order terminal 20 displays information indicating that the brand is to be no longer handled after sellout in a display region of brand information of the sellout brand on the brand selection screen.

Subsequently, upon detection that the remaining number of magazines 800 to which the sellout brand is assigned becomes zero (0) and that the storage state of the storage region in the carton fixture 60 to which the sellout brand is assigned becomes absent, the management operation processing unit 113 changes the handling state of the sellout brand in the by-store brand information in the store DB 115 from the sellout state to the stop state.

In addition, the order-terminal supporting unit 112 transmits the order disenabling information of the sellout brand to the order terminal 20, and thus, ordering of the sellout brand is disenabled on the order terminal 20.

Upon detection of an operation on the immediate stop button, the management operation processing unit 113 notifies the fixture supporting unit 111 of information indicating collective dispensing together with a brand ID of the above selected target brand (the immediate stop brand).

Thus, the fixture supporting unit 111 transmits, to the first control unit 30, a removal instruction including magazine IDs of all magazines 800 to which the immediate stop brand is assigned, and transmits, to the second control unit 40, a removal instruction including position information of all storage regions in the carton fixture 60 to which the immediate stop brand is assigned.

As a result, in the pack fixture 80, pack-position reporting LEDs 551 corresponding to all the magazines 800 included in the removal instruction are turned on in a light color corresponding to removal, and, in the carton fixture 60, carton-position reporting LEDs 62 corresponding to all the storage positions included in the removal instruction are turned on in a light color corresponding to removal.

Upon detection that the remaining number of magazines 800 to which the immediate stop brand is assigned becomes zero (0) and that the storage state of the storage region in the carton fixture 60 to which the immediate stop brand is assigned becomes absent, the management operation processing unit 113 changes the handling state of the immediate stop brand in the by-store brand information in the store DB 115 from the normal state to the stop state.

In addition, the order-terminal supporting unit 112 transmits the order disenabling information of the immediate stop brand to the order terminal 20, and thus, ordering of the immediate stop brand is disenabled on the order terminal 20.

In addition, based on the by-store brand information in the store DB 115, the management operation processing unit 113 may display a brand handling state list including the handling state for each brand, or may display a brand information list of only brands for which the handling state is the stop state or the sellout state.

On a product storage state management menu, product storage position check, carton-fixture available space check, product storage position change, or the like are provided.

Upon the product storage position check menu being executed, a pack-position reporting LED 551 corresponding to a magazine 800 to which the selected brand is assigned is turned on, and a carton-position reporting LED 62 corresponding to a storage position to which the selected brand is assigned is turned on. Thus, a salesperson can easily grasp the position of the magazine 800 and the position of the storage region in the carton fixture 60 to which the selected brand is assigned.

Upon the carton-fixture available space check menu being executed, the number of unassigned storage regions in the carton fixture 60 is displayed. If different storage regions are provided in the carton fixture 60 according to the shape of a carton product or the size type thereof (e.g., regular type, short type, or slim type), the number of unassigned storage regions for each type of a carton product, that is, the number of carton products that can be stored, may be displayed.

Upon the product storage position change menu being executed, a plurality of magazines 800 for which the storage position is wished to change are pulled out, and stored pack products can be switched between the pulled out magazines 800. Thus, assignment information of the switched brands to the magazines 800 in the pack-fixture management information (the store DB 115) is changed.

The product management menu is not limited to such examples and may include other various menus, such as the menus described in the first embodiment, an order-terminal display order change menu by which the display order of brands on the brand selection screen or the like on the order terminal 20 can be changed, or a menu for increasing or decreasing the number of magazines 800 to which each brand is assigned.

### [Modification]

The above-described embodiments are examples, and the above-described details can be modified as appropriate without departing from the spirit.

For example, in the above-described embodiments, the first control unit 30 that controls the pack fixture 50 or the pack fixture 80 and the second control unit 40 that controls the carton fixture 60 are provided separately. However, instead, a single control unit that controls both the pack fixture 50 or the pack fixture 80 and the carton fixture 60 can be used. In addition, the management PC 10 and the control unit thereof may be formed as a single control device.

In addition, not only the pack fixture 50, but also the carton fixture 60 may have an automatic dispensing function. In contrast, the pack fixture 50 may not have an automatic dispensing function and may report the storage position or the display position of a pack product as in the pack fixture 80.

The pack fixture 50, the pack fixture 80, and the carton fixture 60 are not limited to the above-described configurations.

In addition, in the above-described embodiments, a correspondence relationship between the position of a magazine in the pack fixture 50 and a brand ID of a brand of a pack product to be stored in the magazine and a correspondence relationship between the position of a storage region in the carton fixture 60 and a brand ID of a brand of a carton product to be stored in the storage region are shared between the first control unit 30, the second control unit 40, and the management PC 10. However, only the management PC 10 may have the correspondence relationships. In this case, the first control unit 30 and the second control unit 40 may operate in accordance with an instruction from the management PC 10.

In the above manner, information stored in the product management DB 105 of the management PC 10 and information stored in the magazine management DB 35 of the first control unit 30 or information stored in the storage region management DB 45 of the second control unit 40 may be stored in anywhere within the subject system 1.

In addition, the above-described flowchart illustrates a plurality of steps (processing) in order. However, the order for performing the steps in the embodiments is not limited to the illustrated order. In the embodiments, the illustrated order of steps may be changed as long as details are not interrupted.

In addition, part or all of the above-described details can also be identified as follows. Note that the above-described details are not limited to the following description.
(1) A tobacco product management device to be communicably connected to an order terminal, the order terminal being capable of displaying brand information of tobacco products of a plurality of brands and being capable of accepting a designating operation for a brand that a customer wishes to order from among the plurality of brands, the tobacco product management device including:
   an acquisition means for acquiring a stocked brand identifier by which a brand of a tobacco product is identifiable, the tobacco product being stocked or to be stocked in a product storage unit storing tobacco products in a removable manner;
   a determination means for determining, based on the acquired stocked brand identifier, whether the order terminal is capable of displaying brand information of a tobacco product of a brand indicated by the stocked brand identifier;
   an extraction means for extracting, based on a determination result obtained by the determination means, from a brand master storage unit storing master information regarding brands of tobacco products, the brand information of the tobacco product of the brand indicated by the stocked brand identifier; and
   a transmission means for transmitting, to the order terminal, at least part of the extracted brand information.
(2) The tobacco product management device according to (1), further including:
   a renewal-or-discontinuation information acquisition means for acquiring renewal-or-discontinuation designation information that designates a renewed-or-discontinued brand of tobacco product to be replaced with another brand of tobacco product in the product storage unit; and
   a presentation processing means for causing, if a product stocker unit to which the brand indicated by the stocked brand identifier is assigned does not exist in a plurality of product stocker units that are included in the product storage unit and that are capable of storing tobacco products in a classified manner according to brand, the product storage unit to present a product stocker unit to which the renewed-or-discontinued brand indicated by the renewal-or-discontinuation designation information has been assigned.
(3) The tobacco product management device according to (2), further including:
   a dispensing control means for controlling, if the product storage unit is caused to present the product stocker unit, the product storage unit to dispense all stored tobacco products of the renewed-or-discontinued brand from the product stocker unit corresponding to the renewed-or-discontinued brand indicated by the renewal-or-discontinuation designation information.
(4) The tobacco product management device according to (3),
   wherein, if a tobacco product of the renewed-or-discontinued brand is dispensed under control of the dispensing control means, the transmission means transmits, to the order terminal, information that makes a designating operation for the renewed-or-discontinued brand unacceptable on the order terminal.
(5) The tobacco product management device according to any one of (2) to (4), further including:
   a product sensor unit that senses tobacco products stored in each of the plurality of product stocker units; and
   a stock detection means for detecting, based on sensing information from the product sensor unit, stock of a tobacco product in each of the plurality of product stocker units,
   wherein, after the stock detection means has detected stock of the tobacco product of the brand indicated by the stocked brand identifier, the transmission means transmits at least part of the brand information to the order terminal.
(6) The tobacco product management device according to any one of (1) to (5), further including:
   a dispensing control means for instructing, if information indicating an ordered brand designated by the designating operation is acquired from the order terminal, the product storage unit to dispense a tobacco product of the ordered brand,
   wherein the product storage unit includes a plurality of product stocker units that are capable of storing tobacco products in a classified manner according to brand and a stocker access unit that sets at least one of the plurality of product stocker units to operator accessible state or inaccessible state, and
   wherein, if the information indicating the ordered brand is acquired when the at least one of the product stocker units is in accessible state, the dispensing control means suspends an instruction for dispensing a tobacco product of the ordered brand until the product stocker unit is set to inaccessible state.
(7) The tobacco product management device according to any one of (1) to (6), further including:
   an arrangement determination means for determining, by using the brand information of the tobacco product of the brand indicated by the stocked brand identifier extracted by the extraction means, arrangement of the brand information of the tobacco product of the brand indicated by the stocked brand identifier on a brand selection screen displayed on the order terminal,
   wherein the brand selection screen classifies the brand information of the tobacco products of the plurality brands by a plurality of brand groups, and displays the brand information of each tobacco product in arrangement determined for each brand group, and
   wherein the transmission means further transmits, to the order terminal, information indicating the arrangement determined by the arrangement determination means.
(8) The tobacco product management device according to (7),
   wherein, when determining the arrangement of the brand information of the tobacco product of the brand indicated by the stocked brand identifier, the arrangement determination means changes arrangement of existing brand information that has already been arranged on the brand selection screen, and
   wherein the transmission means further transmits, to the order terminal, information indicating the arrangement of the existing brand information changed by the arrangement determination means.
(9) A tobacco product management method to be executed by a tobacco product management system including at least an order terminal and a product storage unit, the order terminal capable of displaying brand information of tobacco products of a plurality of brands and accepting a designating operation for a brand that a customer wishes to order from among the plurality of brands, the product storage unit storing tobacco products in a removable manner, the tobacco product management method including:
   a step of acquiring a stocked brand identifier by which a brand of a tobacco product is identifiable, the tobacco product being stocked or to be stocked in the product storage unit;
   a step of determining, based on the acquired stocked brand identifier, whether the order terminal is capable of displaying brand information of a tobacco product of a brand indicated by the stocked brand identifier;
   a step of extracting, based on a result of the determination, from a brand master storage unit storing master information regarding brands of tobacco products, the brand information of the tobacco product of the brand indicated by the stocked brand identifier; and
   a step of transmitting, to the order terminal, at least part of the extracted brand information.
(10) The tobacco product management method according to (9), further including:
   a step of acquiring renewal-or-discontinuation designation information that designates a renewed-or-discontinued brand of tobacco product to be replaced with another brand of tobacco product in the product storage unit; and
   a step of causing, if a product stocker unit to which the brand indicated by the stocked brand identifier is assigned does not exist in a plurality of product stocker units that are included in the product storage unit and that are capable of storing tobacco products in a classified manner according to brand, the product storage unit to present a product stocker unit to which the renewed-or-discontinued brand indicated by the renewal-or-discontinuation designation information has been assigned.
(11) The tobacco product management method according to (10), further including:
   a control step of controlling, if the product storage unit is caused to present the product stocker unit, the product storage unit to dispense all stored tobacco products of the renewed-or-discontinued brand from the product stocker unit corresponding to the renewed-or-discontinued brand indicated by the renewal-or-discontinuation designation information.
(12) The tobacco product management method according to (11), further including:
   a step of transmitting, if a tobacco product of the renewed-or-discontinued brand is dispensed, to the order terminal, information that makes a designating operation for the renewed-or-discontinued brand unacceptable on the order terminal.
(13) The tobacco product management method according to any one of (10) to (12),
   wherein the tobacco product management system further includes a product sensor unit that senses tobacco products stored in each of the plurality of product stocker units, the tobacco product management method further including:
   a step of detecting, based on sensing information from the product sensor unit, stock of a tobacco product in each of the plurality of product stocker units,
   wherein, in the transmission step, after stock of the tobacco product of the brand indicated by the stocked brand identifier has been detected, at least part of the brand information is transmitted to the order terminal.
(14) The tobacco product management method according to any one of (9) to (13),
   wherein product storage unit includes a plurality of product stocker units that are capable of storing tobacco products in a classified manner according to brand and a stocker access unit that sets at least one of the plurality of product stocker units to operator accessible state or inaccessible state, the tobacco product management method further including:
   a step of instructing, if information indicating an ordered brand designated by the designating operation is acquired from the order terminal, the product storage unit to dispense a tobacco product of the ordered brand; and
   a step of suspending, if the information indicating the ordered brand is acquired when the at least one of the product stocker units is in accessible state, an instruction for dispensing a tobacco product of the ordered brand until the product stocker unit is set to inaccessible state.
(15) The tobacco product management method according to any one of (9) to (14), further including:
   a step of determining, by using the brand information of the tobacco product of the brand indicated by the stocked brand identifier extracted by the extraction means, arrangement of the brand information of the tobacco product of the brand indicated by the stocked brand identifier on a brand selection screen displayed on the order terminal; and
   a step pf transmitting, to the order terminal, information indicating the determined arrangement,
   wherein the brand selection screen classifies the brand information of the tobacco products of the plurality brands by a plurality of brand groups, and displays the brand information of each tobacco product in arrangement determined for each brand group.
(16) The tobacco product management method according to (15), further including:
   a step pf changing, when determining the arrangement of the brand information of the tobacco product of the brand indicated by the stocked brand identifier, arrangement of existing brand information that has already been arranged on the brand selection screen; and
   a step of transmitting, to the order terminal, information indicating the changed arrangement of the existing brand information.
(17) The tobacco product management device according to (1), further including:
   a stocker management means for managing a plurality of product stocker units that are included in the product storage unit and that are capable of storing tobacco products in a classified manner according to brand,
   wherein the plurality of product stocker units include a plurality of carton stocker units that are capable of storing carton products of tobacco products in a classified manner and a plurality of single-item stocker units that are capable of storing pack products of tobacco products in a classified manner according to brand, and
   wherein the stocker management means newly assigns the brand indicated by the stocked brand identifier to a carton stocker unit to which no brand is assigned among the plurality of carton stocker units, newly assigns the brand to a single-item stocker unit to which no brand is assigned among the plurality of single-item stocker units, and further outputs information that encourages stock of a pack product of the brand.
(18) The tobacco product management device according to (1) or (17), further including:
   a sensor unit that senses tobacco products stored in each of a plurality of product stocker units that are included in the product storage unit or senses each of the plurality of product stocker units provided in the product storage unit, each of the plurality of product stocker units capable of storing tobacco products in a classified manner according to brand;
   a detection means for detecting, based on sensing information from the sensor unit, a storage state of tobacco products in each of the plurality of product stocker units or a presence state of each of the plurality of product stocker units in the product storage unit; and
   an information acquisition means for acquiring stop designation information that designates a handling stop brand of tobacco product that is to be no longer handled in the product storage unit,
   wherein, if the detection means detects absence of tobacco products of the handling stop brand in a product stocker unit to which the handling stop brand indicated by the stop designation information is assigned, or if the detection means detects removal of a product stocker unit to which the handling stop brand indicated by the stop designation information is assigned from the product storage unit, the transmission means transmits, to the order terminal, information for disenabling ordering of the handling stop brand on the order terminal.
(19) The tobacco product management device according to (18), further including:
   a stocker management means for managing a plurality of product stocker units that are included in the product storage unit and that are capable of storing tobacco products in a classified manner according to brand,
   wherein the stop designation information further includes information that designates whether the handling stop brand is to be no longer handled immediately or is to be no longer handled after sellout, and
   wherein, if the information acquisition means acquires the stop designation information indicating that the handling stop brand is to be no longer handled immediately, the stocker management means causes the product storage unit to present all product stocker units to which the handling stop brand is assigned in order to make all tobacco products of the handling stop brand indicated by the stop designation information be removed.
(20) The tobacco product management device according to (18) or (19),
   wherein, if the information acquisition means acquires the stop designation information indicating that the handling stop brand is to be no longer handled after sellout, the transmission means transmits, to the order terminal, information indicating that the handling stop brand indicated by the stop designation information is to be no longer handled after sellout.
(21) The tobacco product management device according to any one of (1) and (17) to (20), further including:
   a recall information acquisition means for acquiring recall brand information indicating a recall target brand of tobacco product,
   wherein the transmission means transmits, to the order terminal, information for disenabling ordering of the recall target brand indicated by the recall brand information acquired by the recall information acquisition means.
(22) The tobacco product management device according to (21), further including:
   a sensor unit that senses tobacco products stored in each of a plurality of product stocker units that are included in the product storage unit or senses each of the plurality of product stocker units provided in the product storage unit, each of the plurality of product stocker units capable of storing tobacco products in a classified manner according to brand; and
   a detection means for detecting, based on sensing information from the sensor unit, a storage state of tobacco products in each of the plurality of product stocker units or a presence state of each of the plurality of product stocker units in the product storage unit,
   wherein, after the detection means has detected removal of at least one or all of tobacco products of the recall target brand from a product stocker unit to which the recall target brand is assigned, or after the detection means has detected removal of a product stocker unit to which the recall target brand is assigned from the product storage unit, the transmission means transmits, to the order terminal, information for enabling ordering of the recall target brand on the order terminal.
(23) The tobacco product management device according to (22), further including:
   a stocker management means for managing a plurality of product stocker units that are included in the product storage unit and that are capable of storing tobacco products in a classified manner according to brand,
   wherein, if the recall brand information acquired by the recall information acquisition means is acquired, the stocker management means causes the product storage unit to present a product stocker unit to which the recall target brand is assigned, and, even if the detection means detects absence of all the tobacco products of the recall target brand in the product stocker unit to which the recall target brand is assigned, or even if the detection means detects removal of the product stocker unit to which the recall target brand is assigned from the product storage unit, the stocker management means does not cancel the assignment of the recall target brand to the product stocker unit.
(24) The tobacco product management method according to (9),
   wherein the product storage unit includes a plurality of product stocker units that are capable of storing tobacco products in a classified manner according to brand, and
   wherein the plurality of product stocker units include a plurality of carton stocker units that are capable of storing carton products of tobacco products in a classified manner and a plurality of single-item stocker units that are capable of storing pack products of tobacco products in a classified manner according to brand, the tobacco product management method further including:
   a step of newly assigning the brand indicated by the stocked brand identifier to a carton stocker unit to which no brand is assigned among the plurality of carton stocker units, and newly assigning the brand to a single-item stocker unit to which no brand is assigned among the plurality of single-item stocker units; and
   a step of outputting information that encourages stock of a pack product of the brand indicated by the stock brand identifier.
(25) The tobacco product management method according to (9) or (24),
   wherein the product storage unit includes a plurality of product stocker units that are capable of storing tobacco products in a classified manner according to brand and a sensor unit that senses tobacco products stored in each of the plurality of product stocker units or senses each of the plurality of product stocker units provided in the product storage unit, the tobacco product management method further including:
   a step of detecting, based on sensing information from the sensor unit, a storage state of tobacco products in each of the plurality of product stocker units or a presence state of each of the plurality of product stocker units in the product storage unit;
   a step of acquiring stop designation information that designates a handling stop brand of tobacco product that is to be no longer handled in the product storage unit; and
   a step of transmitting, if absence of tobacco products of the handling stop brand in a product stocker unit to which the handling stop brand indicated by the stop designation information is assigned is detected, or if removal of a product stocker unit to which the handling stop brand indicated by the stop designation information is assigned from the product storage unit is detected, to the order terminal, information for disenabling ordering of the handling stop brand on the order terminal.
(26) The tobacco product management method according to (25),
   wherein the stop designation information further includes information that designates whether the handling stop brand is to be no longer handled immediately or is to be no longer handled after sellout, the tobacco product management method further including:
   a step of causing, if the stop designation information indicating that the handling stop brand is to be no longer handled immediately is acquired, the product storage unit to present all product stocker units to which the handling stop brand is assigned in order to make all tobacco products of the handling stop brand indicated by the stop designation information be removed.
(27) The tobacco product management method according to (25) or (26), further including:
   a step of transmitting, if the stop designation information indicating that the handling stop brand is to be no longer handled after sellout is acquired, to the order terminal, information indicating that the handling stop brand indicated by the stop designation information is to be no longer handled after sellout.
(28) The tobacco product management method according to any one of (9) and (24) to (27), further including:
   a step of acquiring recall brand information indicating a recall target brand of tobacco product; and
   a step of transmitting, to the order terminal, information for disenabling ordering of the recall target brand indicated by the acquired recall brand information.
(29) The tobacco product management method according to (28),
   wherein the product storage unit includes a plurality of product stocker units that are capable of storing tobacco products in a classified manner according to brand and a sensor unit that senses tobacco products stored in each of the plurality of product stocker units or senses each product stocker unit provided in the product storage unit, the tobacco product management method further including:
   a step of detecting, based on sensing information from the sensor unit, a storage state of tobacco products in each of the plurality of product stocker units or a presence state of each of the plurality of product stocker units in the product storage unit; and
   a step of transmitting, after removal of at least one or all of tobacco products of the recall target brand from a product stocker unit to which the recall target brand is assigned has been detected, or after the detection means has detected removal of a product stocker unit to which the recall target brand is assigned from the product storage unit, to the order terminal, information for enabling ordering of the recall target brand on the order terminal.
(30) The tobacco product management method according to (29), further including:
   a step of causing, if the recall brand information is acquired, the product storage unit to present a product stocker unit to which the recall target brand is assigned,
   wherein, even if absence of all the tobacco products of the recall target brand in the product stocker unit to which the recall target brand is assigned is detected, or even if the detection means detects removal of the product stocker unit to which the recall target brand is assigned from the product storage unit, the assignment of the recall target brand to the product stocker unit is not canceled.

The present application claims priority on Japanese Patent Application No. 2018-187672 filed on October 2, 2018, the entire contents of which are incorporated herein by reference.

## Claims

1. A tobacco product management device to be communicably connected to an order terminal, the order terminal being capable of displaying brand information of tobacco products of a plurality of brands and being capable of accepting a designating operation for a brand that a customer wishes to order from among the plurality of brands, the tobacco product management device comprising:
an acquisition means for acquiring a stocked brand identifier by which a brand of a tobacco product is identifiable, the tobacco product being stocked or to be stocked in a product storage unit storing tobacco products in a removable manner;
a determination means for determining, based on the acquired stocked brand identifier, whether the order terminal is capable of displaying brand information of a tobacco product of a brand indicated by the stocked brand identifier;
an extraction means for extracting, based on a determination result obtained by the determination means, from a brand master storage unit storing master information regarding brands of tobacco products, the brand information of the tobacco product of the brand indicated by the stocked brand identifier; and
a transmission means for transmitting, to the order terminal, at least part of the extracted brand information.

2. The tobacco product management device according to claim 1, further comprising:
a renewal-or-discontinuation information acquisition means for acquiring renewal-or-discontinuation designation information that designates a renewed-or-discontinued brand of tobacco product to be replaced with another brand of tobacco product in the product storage unit; and
a presentation processing means for causing, if a product stocker unit to which the brand indicated by the stocked brand identifier is assigned does not exist in a plurality of product stocker units that are included in the product storage unit and that are capable of storing tobacco products in a classified manner according to brand, the product storage unit to present a product stocker unit to which the renewed-or-discontinued brand indicated by the renewal-or-discontinuation designation information has been assigned.

3. The tobacco product management device according to claim 2, further comprising:
a dispensing control means for controlling, if the product storage unit is caused to present the product stocker unit, the product storage unit to dispense all stored tobacco products of the renewed-or-discontinued brand from the product stocker unit corresponding to the renewed-or-discontinued brand indicated by the renewal-or-discontinuation designation information.

4. The tobacco product management device according to claim 2 or 3, further comprising:
a product sensor unit that senses tobacco products stored in each of the plurality of product stocker units; and
a stock detection means for detecting, based on sensing information from the product sensor unit, stock of a tobacco product in each of the plurality of product stocker units,
wherein, after the stock detection means has detected stock of the tobacco product of the brand indicated by the stocked brand identifier, the transmission means transmits at least part of the brand information to the order terminal.

5. The tobacco product management device according to any one of claims 1 to 4, further comprising:
a dispensing control means for instructing, if information indicating an ordered brand designated by the designating operation is acquired from the order terminal, the product storage unit to dispense a tobacco product of the ordered brand,
wherein the product storage unit includes a plurality of product stocker units that are capable of storing tobacco products in a classified manner according to brand and a stocker access unit that sets at least one of the plurality of product stocker units to operator accessible state or inaccessible state, and
wherein, if the information indicating the ordered brand is acquired when the at least one product stocker unit is in accessible state, the dispensing control means suspends an instruction for dispensing a tobacco product of the ordered brand until the product stocker unit is set to inaccessible state.

6. The tobacco product management device according to any one of claims 1 to 5, further comprising:
an arrangement determination means for determining, by using the brand information of the tobacco product of the brand indicated by the stocked brand identifier extracted by the extraction means, arrangement of the brand information of the tobacco product of the brand indicated by the stocked brand identifier on a brand selection screen displayed on the order terminal,
wherein the brand selection screen classifies the brand information of the tobacco products of the plurality brands by a plurality of brand groups, and displays the brand information of each tobacco product in arrangement determined for each brand group, and
wherein the transmission means further transmits, to the order terminal, information indicating the arrangement determined by the arrangement determination means.

7. The tobacco product management device according to claim 6,
wherein, when determining the arrangement of the brand information of the tobacco product of the brand indicated by the stocked brand identifier, the arrangement determination means changes arrangement of existing brand information that has already been arranged on the brand selection screen, and
wherein the transmission means further transmits, to the order terminal, information indicating the arrangement of the existing brand information changed by the arrangement determination means.

8. A tobacco product management method to be executed by a tobacco product management system including at least an order terminal and a product storage unit, the order terminal capable of displaying brand information of tobacco products of a plurality of brands and accepting a designating operation for a brand that a customer wishes to order from among the plurality of brands, the product storage unit storing tobacco products in a removable manner, the tobacco product management method comprising:
a step of acquiring a stocked brand identifier by which a brand of a tobacco product is identifiable, the tobacco product being stocked or to be stocked in the product storage unit;
a step of determining, based on the acquired stocked brand identifier, whether the order terminal is capable of displaying brand information of a tobacco product of a brand indicated by the stocked brand identifier;
a step of extracting, based on a result of the determination, from a brand master storage unit storing master information regarding brands of tobacco products, the brand information of the tobacco product of the brand indicated by the stocked brand identifier; and
a step of transmitting, to the order terminal, at least part of the extracted brand information.

9. The tobacco product management device according to claim 1, further comprising:
a stocker management means for managing a plurality of product stocker units that are included in the product storage unit and that are capable of storing tobacco products in a classified manner according to brand,
wherein the plurality of product stocker units include a plurality of carton stocker units that are capable of storing carton products of tobacco products in a classified manner and a plurality of single-item stocker units that are capable of storing pack products of tobacco products in a classified manner according to brand, and
wherein the stocker management means newly assigns the brand indicated by the stocked brand identifier to a carton stocker unit to which no brand is assigned among the plurality of carton stocker units, newly assigns the brand to a single-item stocker unit to which no brand is assigned among the plurality of single-item stocker units, and further outputs information that encourages stock of a pack product of the brand.

10. The tobacco product management device according to claim 1 or 9, further comprising:
a sensor unit that senses tobacco products stored in each of a plurality of product stocker units that are included in the product storage unit or senses each of the plurality of product stocker units provided in the product storage unit, each of the plurality of product stocker units capable of storing tobacco products in a classified manner according to brand;
a detection means for detecting, based on sensing information from the sensor unit, a storage state of tobacco products in each of the plurality of product stocker units or a presence state of each of the plurality of product stocker units in the product storage unit; and
an information acquisition means for acquiring stop designation information that designates a handling stop brand that is to be no longer handled in the product storage unit,
wherein, if the detection means detects absence of tobacco products of the handling stop brand in a product stocker unit to which the handling stop brand indicated by the stop designation information is assigned, or if the detection means detects removal of a product stocker unit to which the handling stop brand indicated by the stop designation information is assigned from the product storage unit, the transmission means transmits, to the order terminal, information for disenabling ordering of the handling stop brand on the order terminal.

11. The tobacco product management device according to claim 10, further comprising:
a stocker management means for managing a plurality of product stocker units that are included in the product storage unit and that are capable of storing tobacco products in a classified manner according to brand,
wherein the stop designation information further includes information that designates whether the handling stop brand is to be no longer handled immediately or is to be no longer handled after sellout, and
wherein, if the information acquisition means acquires the stop designation information indicating that the handling stop brand is to be no longer handled immediately, the stocker management means causes the product storage unit to present all product stocker units to which the handling stop brand is assigned in order to make all tobacco products of the handling stop brand indicated by the stop designation information be removed.

12. The tobacco product management device according to claim 10 or 11,
wherein, if the information acquisition means acquires the stop designation information indicating that the handling stop brand is to be no longer handled after sellout, the transmission means transmits, to the order terminal, information indicating that the handling stop brand indicated by the stop designation information is to be no longer handled after sellout.

13. The tobacco product management device according to any one of claims 1 and 9 to 12, further comprising:
a recall information acquisition means for acquiring recall brand information indicating a recall target brand,
wherein the transmission means transmits, to the order terminal, information for disenabling ordering of the recall target brand indicated by the recall brand information acquired by the recall information acquisition means.

14. The tobacco product management device according to claim 13, further comprising:
a sensor unit that senses tobacco products stored in each of a plurality of product stocker units that are included in the product storage unit or senses each of the plurality of product stocker units provided in the product storage unit, each of the plurality of product stocker units capable of storing tobacco products in a classified manner according to brand; and
a detection means for detecting, based on sensing information from the sensor unit, a storage state of tobacco products in each of the plurality of product stocker units or a presence state of each of the plurality of product stocker units in the product storage unit,
wherein, after the detection means has detected removal of at least one or all of tobacco products of the recall target brand from a product stocker unit to which the recall target brand is assigned, or after the detection means has detected removal of a product stocker unit to which the recall target brand is assigned from the product storage unit, the transmission means transmits, to the order terminal, information for enabling ordering of the recall target brand on the order terminal.

15. The tobacco product management device according to claim 14, further comprising:
a stocker management means for managing a plurality of product stocker units that are included in the product storage unit and that are capable of storing tobacco products in a classified manner according to brand,
wherein, if the recall brand information acquired by the recall information acquisition means is acquired, the stocker management means causes the product storage unit to present a product stocker unit to which the recall target brand is assigned, and, even if the detection means detects absence of all the tobacco products of the recall target brand in the product stocker unit to which the recall target brand is assigned, or even if the detection means detects removal of the product stocker unit to which the recall target brand is assigned from the product storage unit, the stocker management means does not cancel the assignment of the recall target brand to the product stocker unit.
